# EUROPEAN PATENT APPLICATION

(11) **EP 2 600 331 A1**
(43) Date of publication of application: **05.06.2013**
(21) Application number: 12193328.7
(22) Date of filing: 20.11.2012
(51) Int. Cl.: G09B 5/06, G09B 5/08, G09B 5/14, G09B 9/30

(54) **Head-mounted display based education and instruction**

(30) Priority: 30.11.2011 US 201113308218
(71) Applicant: Microsoft Corporation, Redmond, WA 98052 (US)
(72) Inventor: Stone Perez, Kathryn, Redmond, WA 98052 (US); Geisner, Kevin, Redmond, WA 98052 (US); Sugden, Ben, Redmond, WA 98052 (US); McCulloch, Daniel, Redmond, WA 98052 (US); Clavin, John, Redmond, WA 98052 (US)
(74) Representative: Fischer, Michael

(57) **Abstract**

Technology disclosed herein provides for use of HMDs in a classroom setting. Technology disclosed herein provides for HMD use for holographic instruction. In one embodiment, the HMD is used for social coaching. User profile information may be used to tailor instruction to a specific user based on known skills, learning styles, and/or characteristics. One or more individuals may be monitored based on sensor data. The sensor data may come from an HMD. The monitoring may be analyzed to determine how to enhance an experience. The experience may be enhanced by presenting an image in at least one head mounted display worn by the one or more individuals.

## Description

### BACKGROUND

Head-mounted display (HMD) devices can be used in various applications, including military, aviation, medicine, video gaming, entertainment, sports, and so forth. See-through HMD devices allow the user to observe the physical world, while optical elements add light from one or more small micro-displays into the user's visual path, to provide an augmented reality image.

### SUMMARY

A head mounted display (HMD) device and systems and methods that use HMDs in education and instruction are provided. The HMD may be used in a classroom teaching environment. The HMD may be used to provide holographic instruction. The HMD may be used to provide social coaching. The education or instruction may be tailored to the individual based on known skills, learning styles, or characteristics ofthe individual.

One embodiment includes a method of enhancing an experience. Monitoring of one or more individuals engaged in the experience is performed. The monitoring is based on data from one or more sensors. The monitoring is analyzed to determine how to enhance the experience. The experience is enhanced based on the analyzing. Enhancing the experience includes presenting a signal to at least one see-through head mounted display worn by one of the individuals.

One embodiment includes a system for enhancing education or instruction. The system includes a processor and a processor readable storage device coupled to the processor. The processor readable storage device has stored thereon instructions which, when executed on the processor cause the processor to receive sensor data from at least one HMD. Further the processor monitors one or more individuals based on the sensor data. The processor analyzes the monitoring to determine how to enhance an educational or instructional experience engaged in by the one or more individuals. The processor enhances the educational or instructional experience based on the analyzing. In one embodiment, the enhancing includes providing information to at least one see-through head mounted display (HMD) worn by one or more of the individuals.

One embodiment includes a processor readable storage device that has instructions which, when executed on a processor, cause the processor to perform a method of enhancing an individual's performance. The method includes accessing sensor data, and processing the sensor data to determine information indicative of performance of the individual. The information indicative of performance of the individual is analyzed to determine how to enhance the individual's performance. A signal is provided in a head mounted display worn by the individual to enhance the individual's performance.

This summary is provided to introduce a selection of concepts in a simplified form that are further described below in the description. This summary is not intended to identify key features or essential features of the claimed subject matter, nor is it intended to be used to limit the scope ofthe claimed subject matter.

### BRIEF DESCRIPTION OF THE DRAWINGS

Figure 1A shows one example classroom learning environment in which HMDs may be used, in accordance with embodiments.

Figure 1B depicts another example holographic learning environment in which an HMD may be used, in accordance with embodiments.

Figure 1C depicts another example learning environment in which an HMD may be used for social coaching, in accordance with embodiments.

Figure 1D is a block diagram of components of one embodiment of a system for using an HMD in education and instruction.

Figure 1E is a flowchart of one embodiment of a process of using an HMD in education and instruction.

Figure 2A is a block diagram depicting example components of one embodiment of an HMD device.

Figure 2B depicts a top view of a portion of HMD device.

Figure 2C illustrates an exemplary arrangement of positions of respective sets of gaze detection elements in a gaze detection system for each eye positioned facing each respective eye on a mixed reality display device embodied in a set of eyeglasses.

Figure 2D illustrates another exemplary arrangement of positions of respective sets of gaze detection elements in a gaze detection system for each eye positioned facing each respective eye on a mixed reality display device embodied in a set of eyeglasses.

Figure 2E illustrates yet another exemplary arrangement of positions of respective sets of gaze detection elements in a gaze detection system for each eye positioned facing each respective eye by the set of eyeglasses.

Figure 3 is a block diagram depicting various components of an HMD device.

Figure 4 is a block diagram of one embodiment of the components of a processing unit of an HMD device.

Figure 5 is a block diagram of one embodiment of the components of the hub computing system and the capture device.

Figure 6 illustrates an example embodiment of a computing system that may be used to implement hub computing system.

Figure 7 is a flowchart of one embodiment of a process of providing a teacher with information regarding a student.

Figure 8 is a flowchart of one embodiment of a process of providing a teacher with comprehension or attention of a student.

Figure 9 is a flowchart of one embodiment of a process of providing a different teacher to a student.

Figure 10 is a flowchart of one embodiment of a process of providing holographic instruction.

Figure 11 is a flowchart of one embodiment of a process of providing holographic instruction to assemble an apparatus.

Figure 12 is a flowchart of one embodiment of a process of providing holographic instruction when playing music.

Figure 13A is a flowchart of one embodiment of a process of providing holographic instruction for sports.

Figure 13B is a flowchart of one embodiment of a process of providing holographic instruction for helping a user to cook.

Figure 14 is a flowchart of one embodiment of a process of providing instruction to help a student solve a problem.

Figure 15 is a flowchart of one embodiment of a process of providing instruction to help a student write.

Figure 16 is a flowchart of one embodiment of a process of social coaching using an HMD.

Figure 16A is a flowchart of one embodiment of a process of social coaching using an HMD.

Figure 16B is a flowchart of one embodiment of a process of social coaching using an HMD.

Figure 17A is a flowchart of a method embodiment for determining a three-dimensional user field of view.

Figure 17B is a flowchart of a method embodiment for identifying one or more real objects in a user field of view.

Figure 17C is a flowchart of a method embodiment for generating a three-dimensional model of a user space.

Figure 17D is a flowchart of a method embodiment for identifying one or more objects in a user field of view.

Figure 17E is a flowchart of a method embodiment for identifying one or more objects in a user field of view.

Figure 18 is a flowchart of a method embodiment for determining gaze in a see-through, near-eye mixed reality display system.

### DETAILED DESCRIPTION

See-through HMD devices can use optical elements such as mirrors, prisms, and holographic lenses to add light from one or two small micro-displays into a user's visual path. The light provides holographic images to the user's eyes via see-though lenses. Technology disclosed herein provides for use of HMDs in a classroom setting. Technology disclosed herein provides for HMD use for holographic instruction. In one embodiment, the HMD is used for social coaching. User profile information may be used to tailor instruction to a specific user based on known skills, learning styles, and/or characteristics.

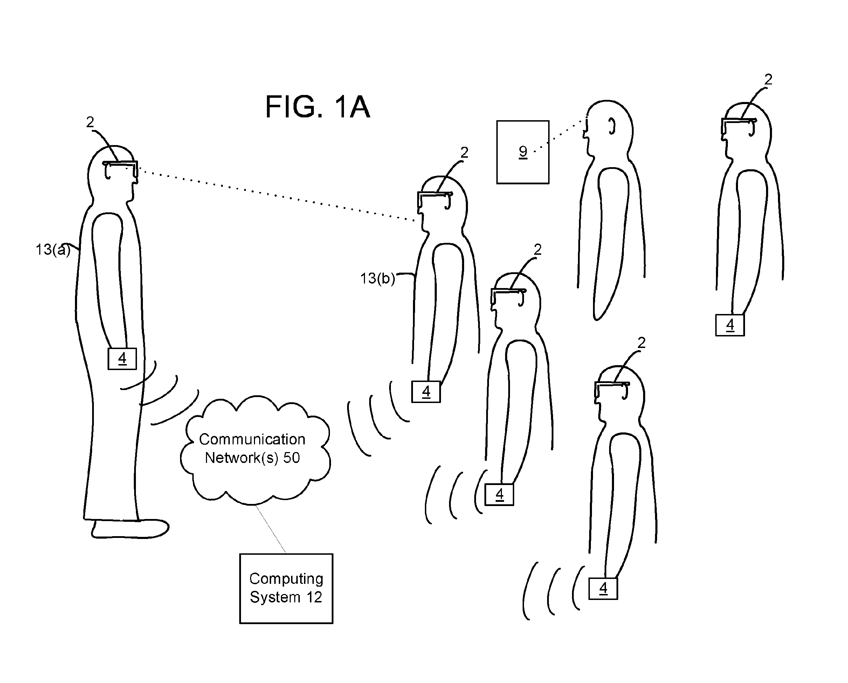

Figure 1A shows one example learning environment in which HMDs may be used, in accordance with embodiments. This may be referred to as a classroom teaching environment. A teacher 13(a) and students 13(b) each wear their own HMD 2, in one embodiment. Note that in one embodiment, the teacher 13(a) wears an HMD 2, but the students 13(b) are not required to. In one embodiment, the students 13(b) each wear an HMD 2, but the teacher 13(a) is not required to. In this depicted example, the teacher 13(a) is live in-person. However, instruction may be provided without a live teacher. For example, a student 13(b) might access a recorded lesson and view that in their HMD 2. Note the students and teachers are examples of individuals who are engaged in an experience.

Each user has a processing unit 4 that is associated with the HMD 2, in this example. Further details are explained below, but briefly the processing unit 4 may communicate wirelessly or by wireline with it associated HMD 2 to provide processing for the HMD 2. The processing unit 4 may also communicate wirelessly or by wireline over network 50. Therefore, data may be shared. As one example, an HMD 2 may have sensors that can monitor the wearer, as well as a region around (e.g., in front of) the wearer. The sensor data may be analyzed to determine comprehension and/or attention of the student. This information may be provided to the teacher 13(a). Computing system 12 may provide additional processing power. Computing system 12 could be local (e.g., in the classroom or building) or remote (e.g., over the Internet). In one embodiment, the teacher 13(a) can access student profile information from computer system 12, or elsewhere.

In one embodiment, a student 13(b) has access to a presentation device 9. The student may receive instruction and/or feedback through the presentation device 9. In one embodiment, this feedback is based on analyzing sensor data from an HMD 2 worn by an instructor 13(a). The presentation device 9 could have a visual display and/or audio transducer. Examples of presentation device 9 include, but are not limited to,

Figure 1A shows a 1:n teacher to student interaction. The interaction could be 1:1, n:n, or n:m, as a few other examples. Note that it is not required for a live teacher to be present. For example, the teacher 13 (a) may be provided via a video recording. This may be presented in an HMD 2 or a display such as a display that all students 13 (b) may watch together.

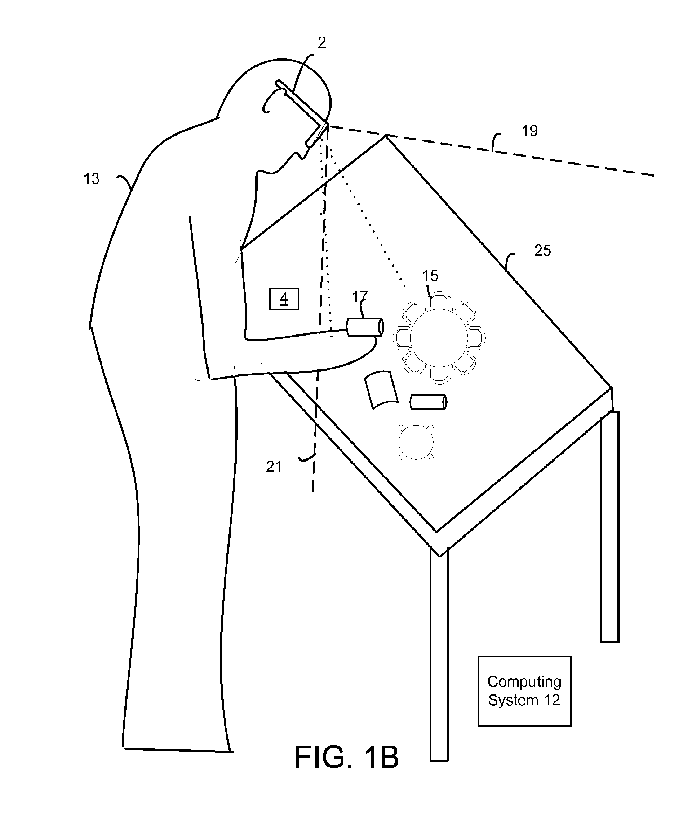

Figure 1B depicts another example learning environment in which an HMD 2 may be used, in accordance with embodiments. This environment may be used to provide holographic instruction. In this embodiment, the individual 13 is assembling some apparatus 15. The individual 13 is wearing an HMD 2 which has a field of view as defined by lines 19, 21. A holographic image may be displayed in the HMD 2 to show the individual 13 how to assemble the apparatus 15. For example, the HMD may show a holographic image what the apparatus should look like at some stage of assembly. The individual 13 may be able to walk around or manipulate this holographic image to see things from different perspectives. Another example use of holographic instruction involves presenting a holographic image of the individual's golf swing. Further details and examples are discussed below.

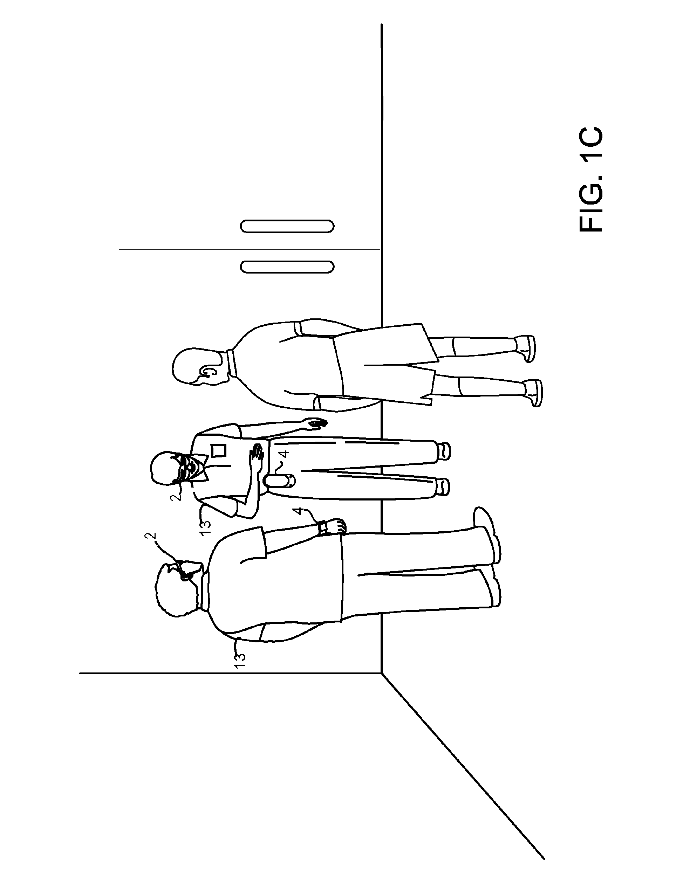

Figure 1C depicts another example learning environment in which an HMD 2 may be used, in accordance with embodiments. This environment may be used for social coaching. In this example, there are three individuals. Two of the three are wearing HMDs 2. One of the wearers is receiving social coaching via the HMD 2. For example, the HMD may remind the wearer that today is the birthday of one the others. Further details and examples are discussed below.

In one embodiment, the HMD 2 is used for information provision. An example of information provision is to help the wearer prepare a meal. The instructions may be provided to the user via the HMD 2. A computer system 12 may track the process of the meal preparation using a 3D camera on the front of the HMD 2. The system may access user profile information in this, or other embodiments. For example, if the user is an expert chef, then the system does not need to tell the user how to sauté mushrooms, just to add some sautéd mushrooms.

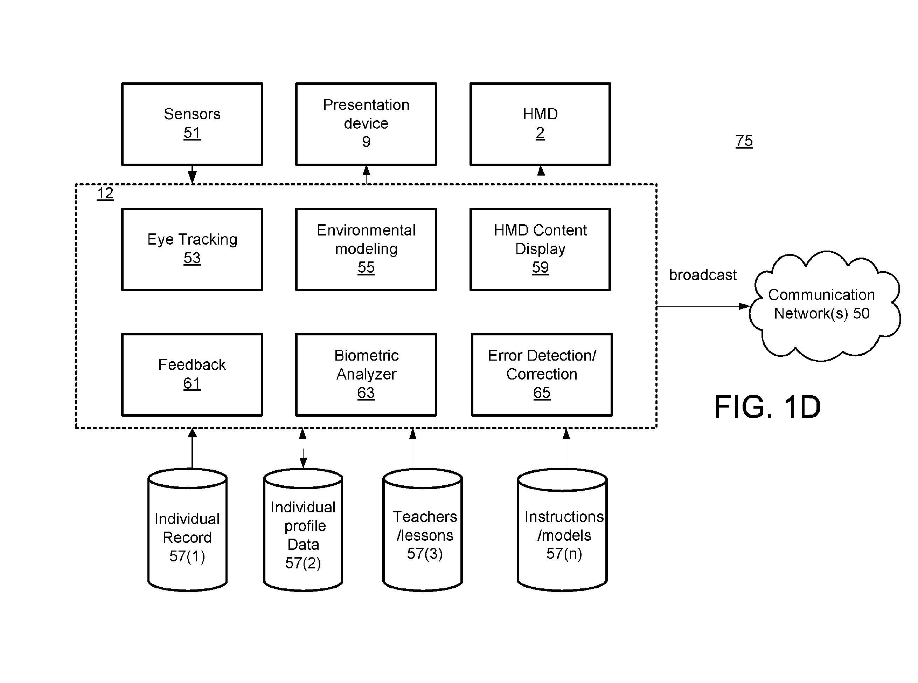

Figure 1D is a block diagram of components of one embodiment of a system 75 for using an HMD 2 in education and instruction. The system 75 includes one or more HMDs 2, sensors 51, one or more computer systems 12, and one or more databases 57(1) - 57(n). Note that the one or more computer systems 12 may reside in a wide variety of devices, such as a processing unit 4 associated with an HMD 2, a cellular telephone, laptop, notepad, desktop, server, etc. Various functions that the computer system 12 is able to perform are represented as modules. These modules could be implemented by executing instructions on a processor.

The sensors 51 could include cameras (2D, 3D, RGB, IR, etc.), heart rate monitors, gyros, GPS, etc. Some of the sensors 51 could be part of an HMD 2. For example, an HMD 2 may have sensors (e.g., image sensors) for tracking eye gaze, as well as front facing cameras. The sensors 51 may be used to collect biometric data regarding the individuals. The sensors 51 also may be used to develop a model of the environment around the individual.

In one embodiment, the eye tracking 53 receives sensor data and determines one or more vectors that define the direction an individual is looking. The environmental modeling 55 receives sensor data and determines a model of the environment. This might be a 2D or 3D model. The model could be an environment around a user (e.g., individual, student or teacher) or of user. The biometric analyzer 63 is able to analyze biometric data pertaining to an individual. The biometric data could be sensor data including, but not limited to, heart rate, audio, and image data. In one embodiment, the biometric analyzer determines a level of student comprehension. In one embodiment, the biometric analyzer determines a level of student attention.

The error detection/correction 65 may input instructions/models 57(n). The instructions/models may describe a proper solution to a problem, instructions for assembling a product, etc. They may also include models, such as 2D or 3D models that can be displayed in the HMD 2. In one embodiment, the error detection/correction 65 is able to determine correctness of a solution to a problem, based on the instructions 57(n). For example, the error detection/correction 65 may determine whether an individual is solving a math problem correctly. A possible solution or hint may be generated to help the individual solve the problem. In one embodiment, the error detection/correction 65 is able to determine correctness of assembly of an apparatus, based on the instructions/model. The error detection/correction 65 can send an image to HMD content display 59 to cause the HMD 2 to display an image that shows a holographic image to assist in assembling the product. In one embodiment, the error detection/correction 65 is able to analyze performance of the individual, based on the instructions/model. For example, the error detection/correction 65 could analyze the individual's efforts at forming letters, in a handwriting embodiment.

The feedback 61 may generate feedback to provide in the HMD 2. In one embodiment, the feedback 61 receives eye tracking data to determine which student 13(b) that the teacher 13(a) is looking at, and then accesses the individual profile database 57(2) to provide a GPA, course attendance, etc. The feedback 61 may also receive input from the biometric analyzer 63 to report to the teacher 13(a) (via their HMD 2) which students are comprehending the subject matter.

The individual profile data 57(2) may include information regarding learning styles, characteristics, and/or known skills of individuals 13. In one embodiment, the system builds up this database 57(2). However, the database 57(2) may be built in whole or in part without the aid of the system. As one example, the system could determine whether an individual 13 is right or left handed, strength, agility, etc. and store this for future use. The database 57(2) may contain a level of competency for an individual 13. The system can tailor instruction based thereon.

The teachers/lessons 57(3) may contain recorded lectures, lessons, etc. In one embodiment, the system 75 offers the student 13(b) an option to view a lecture be a different teacher 13 in their HMD 2. This may be based on the profile data 57(2). In one embodiment, the system selects an appropriate lesson for the student 13(b) based on their profile. For example, the same content in a math course might be presented differently based on the individual profile.

The individual record 57(1) contains a record (e.g., recording) of the individual's activities, performance, interactions with others, etc. The computer system 12 may generate the individual record using sensors on the HMD 2, although other sensors may be used. In one embodiment, the individual record allows a parent or teacher 13(a) to analyze the individual's activities, interactions, performance 13 at a later time. In one embodiment, the individual record 57(1) contains a 3D image of an individual's performance, such as a golf swing. This may be developed by sensors 51 such as a camera system capable of generating 3D images. The computer system 12 may input this performance and generate a holographic image of it for presentation on the HMD 2.

In one embodiment, the computer system 12 may broadcast information. For example, if an individual 13 does particularity well, the computer system 12 might post this on a web page of a social network. Therefore, the individual 13 obtains a sense of accomplishment. This may be especially important for challenged learners. In one embodiment, the computer system 12 may work as an enhanced match maker. For example, if the individual 13 wishes to share information on their likes, dislikes, interests, availability etc. this may be broadcast to various sites on the network 50.

Note that the foregoing description of the system of Figure 1D provides only a few examples to illustrate various sensor 51 and data 57 inputs to the modules 53-65 in the computer system 12. Also, the examples describe only a few examples of how data generated from one module might be used by another. Note that many other possibilities exist. Also note that the databases 57 may be located anywhere. In one embodiment, the computer system 12 uses the Internet to access a database 57.

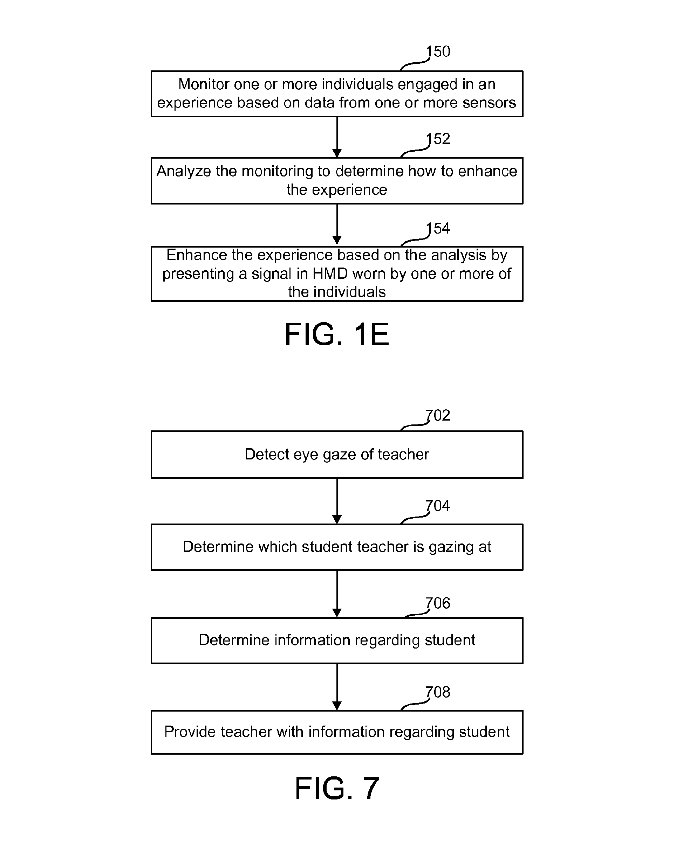

Figure 1E is a flowchart of one embodiment of a process of using an HMD 2 in education and instruction. The process could be used in a classroom environment (e.g., Figure 1A), holographic instruction environment (e.g., Figure 1B), or social coaching (e.g., Figure 1C). The process could be used to provide information provisioning (e.g., helping an individual to bake a cake). The process could be performed by one of more computer systems 12, such as a processing unit 4 associated with an HMD 2, a cellular telephone, laptop, notepad, desktop, server, etc.

In step 150, one or more individuals that are engaged in some experience are monitored. This may be an educational or instructional experience. The monitoring may involve using one or more sensors to collect sensor data, and providing that sensor data to a computer system 12. The sensor data may include data from camera systems, heart rate sensors, audio sensors, GPS, etc. Note that step 150 may include some processing of the sensor data. In one embodiment, the monitoring includes building a 3D model of the environment. The monitoring may include detecting eye gaze of a wearer of an HMD 2. In one embodiment, the monitoring includes producing one or more images of a student's face. In one embodiment, the monitoring includes receiving sensor data from at least one HMD 2.

In step 152, data generated from the monitoring step is analyzed to determine how to enhance experience. This data could be raw sensor data (e.g., heart rate) or processed sensor data (e.g., a 3D model). In one embodiment, step 152 includes analyzing facial expressions, heart rate etc. to determine whether a student 13(b) comprehends subject matter. In one embodiment, step 152 includes inputting data (e.g., instructions/models 57(n)) and using that to analyze data that was captured or produced in step 150. For example, step 152 may include determining whether a student 13(b) is solving a math problem correctly, and determining a hint at how to proceed. The data may be transferred over a network to a remote computing device for analysis. Many additional examples are provided below.

In step 154, the experience (e.g., education or instruction) is enhanced based on the analysis of step 152. With respect to the environment of Figure 1A, the teacher 13(a) might receive feedback of which students 12 are comprehending and/or paying attention. With respect to the environment of Figure 1B, the individual 13 might receive holographic instructions to assemble an apparatus. With respect to the environment of Figure 1C, the individual 13 use might receive social coaching. In one embodiment, step 154 includes providing a signal to at least one HMD 2. The HMD 2 may be one that is being worn by at least one of the individuals that are engaged in the experience. In one embodiment, step 154 includes providing a signal to a presentation device. The presentation device may be a video monitor and/or audio transducer. The presentation device is not limited to being an HMD 2. The presentation device could be associated with, for example, a personal computer, laptop, notepad, cellular telephone, television, etc.

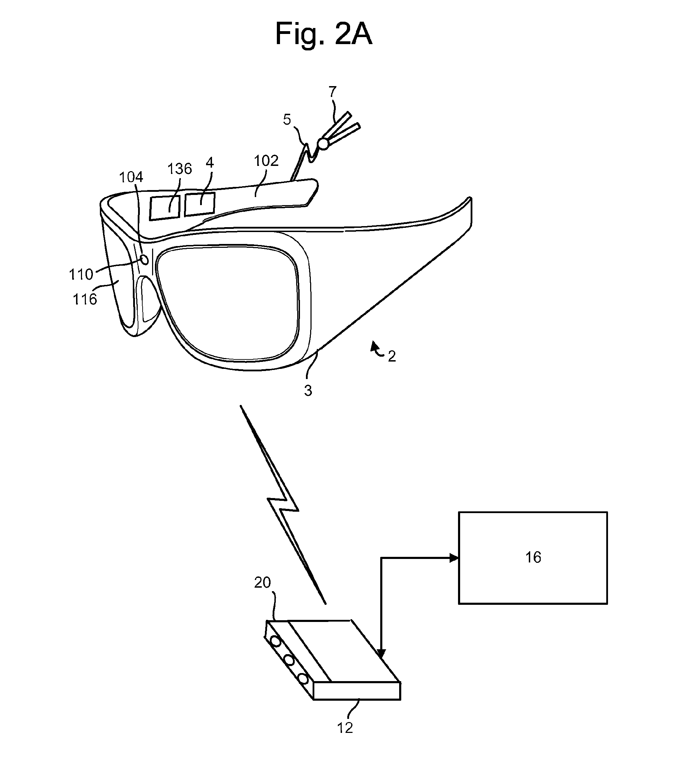

Figure 2A is a block diagram depicting example components of one embodiment of a HMD device. The HMD device 2 includes a head-mounted frame 3 which can be generally in the shape of an eyeglass frame, and include a temple 102, and a front lens frame including a nose bridge 104. Built into nose bridge 104 is a microphone 110 for recording sounds and transmitting that audio data to processing unit 4. Lens 116 is a see-through lens.

The HMD device can be worn on the head of a user so that the user can see through a display and thereby see a real-world scene which includes an image which is not generated by the HMD device. The HMD device 2 can be self-contained so that all of its components are carried by, e.g., physically supported by, the frame 3. Optionally, one or more component of the HMD device is not carried by the frame. For example, one of more components which are not carried by the frame can be physically attached by a wire to a component carried by the frame. The clip-shaped sensor 7 attached by a wire 5, is one such example. The sensor 7 is a biological sensor such as a heart rate sensor which can be clipped to the user's ear. One example of a heart rate sensor emits infrared light at one side of the ear and senses, from the other side, the intensity of the light which is transmitted through the vascular tissue in the ear. There will be variations in the intensity due to variations in blood volume which correspond to the heart rate. Another example of a heart rate sensor attaches to the fingertip. Another example of a heart rate sensor uses a chest strap to detect EKG signals which can be transmitted wirelessly or by wire to receiving and processing circuitry of the HMD device. In addition to a level of the heart rate, e.g., the pulse rate, the regularity of the heart rate can be determined. A heart rate can be classified as regular or jittery, for instance.

Heart rate could also be detected from images of the eye which are obtained from eye tracking camera 134B, described below. For example, US2006/0149154, "Method and apparatus for measuring tissue perfusion," incorporated herein by reference, measures microcirculatory flow of a target tissue such as the surface of the retina without the need to contact the tissue. A pulsed source of light irradiates the tissue, and a matched sensor transduces variations in the reflected light to an electric signal which is indicative of a heart rate and a tissue perfusion index. Another example of a heart rate sensor uses a sensor at the nose bridge, such as discussed in US patent 6,431,705, "Eyewear heart rate monitor," incorporated herein by reference.

Further, one of more components which are not carried by the frame can be in wireless communication with a component carried by the frame, and not physically attached by a wire or otherwise to a component carried by the frame. The one or more components which are not carried by the frame can be carried by the user, in one approach, such as on the wrist. The processing unit 4 could be connected to a component in the frame via a wire or via a wireless link. The term "HMD device" can encompass both on-frame and off-frame components.

The processing unit 4 includes much of the computing power used to operate HMD device 2. The processor may execute instructions stored on a processor readable storage device for performing the processes described herein. In one embodiment, the processing unit 4 communicates wirelessly (e.g., using Wi-Fi®, BLUETOOTH®, infrared (e.g., IrDA® or INFRARED DATA ASSOCIATION® standard), or other wireless communication means) to one or more hub computing systems 12.

Control circuits 136 provide various electronics that support the other components of HMD device 2.

Hub computing system 12 may be a computer, a gaming system or console, or the like. According to an example embodiment, the hub computing system 12 may include hardware components and/or software components to execute applications such as gaming applications, non-gaming applications, or the like. The hub computing system 12 may include a processor that may execute instructions stored on a processor readable storage device for performing the processes described herein.

Hub computing system 12 further includes one or more capture devices, such as a capture device 20. The capture device 20 may be, for example, a camera that visually monitors one or more users (e.g., individuals 13, students 13(b) or teachers 11) and the surrounding space such that gestures and/or movements performed by the one or more users, as well as the structure of the surrounding space, may be captured, analyzed, and tracked to perform one or more controls or actions.

Hub computing system 12 may be connected to an audiovisual device 16 such as a television, a monitor, a high-definition television (HDTV), or the like that may provide game or application visuals. For example, hub computing system 12 may include a video adapter such as a graphics card and/or an audio adapter such as a sound card that may provide audiovisual signals associated with the game application, non-game application, etc. The audiovisual device 16 may receive the audiovisual signals from hub computing system 12 and may then output the game or application visuals and/or audio associated with the audiovisual signals.

Hub computing device 10, with capture device 20, may be used to recognize, analyze, and/or track human (and other types of) targets. For example, a user wearing the HMD device 2 may be tracked using the capture device 20 such that the gestures and/or movements of the user may be captured to animate an avatar or on-screen character and/or may be interpreted as controls that may be used to affect the application being executed by hub computing system 12.

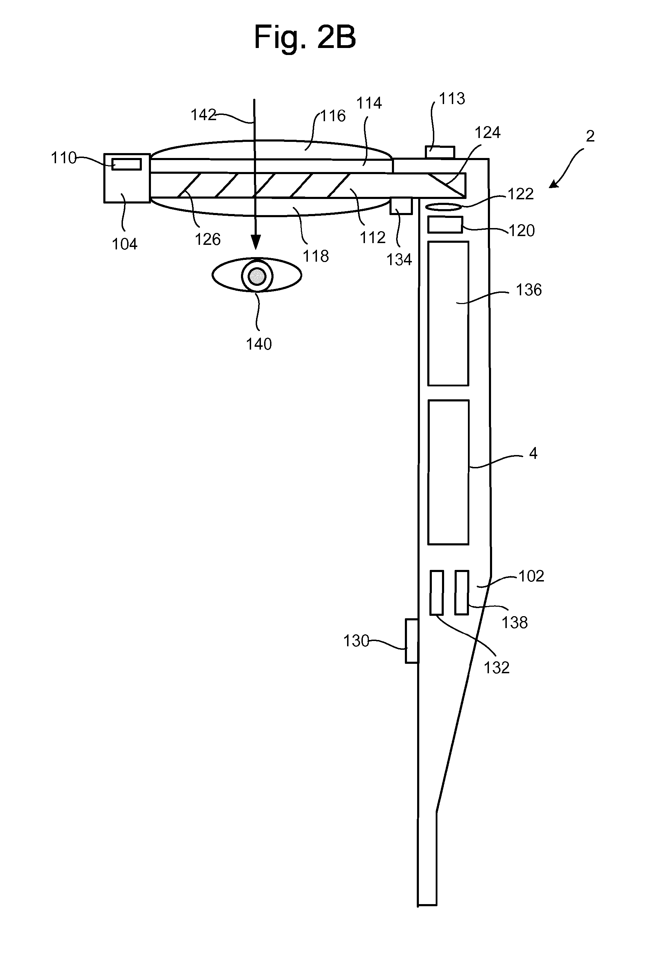

Figure 2B depicts a top view of a portion of HMD device 2, including a portion of the frame that includes temple 102 and nose bridge 104. Only the right side of HMD device 2 is depicted. At the front of HMD device 2 is a forward- or room-facing video camera 113 that can capture video and still images. Those images are transmitted to processing unit 4, as described below. The forward-facing video camera 113 faces outward and has a viewpoint similar to that of the user.

A portion of the frame of HMD device 2 surrounds a display that includes one or more lenses. To show the components of HMD device 2, a portion of the frame surrounding the display is not depicted. The display includes a light guide optical element 112, opacity filter 114, see-through lens 116 and see-through lens 118. In one embodiment, opacity filter 114 is behind and aligned with see-through lens 116, light guide optical element 112 is behind and aligned with opacity filter 114, and see-through lens 118 is behind and aligned with light guide optical element 112. See-through lenses 116 and 118 are standard lenses used in eye glasses and can be made to any prescription (including no prescription). In one embodiment, see-through lenses 116 and 118 can be replaced by a variable prescription lens. In some embodiments, HMD device 2 will include only one see-through lens or no see-through lenses. In another alternative, a prescription lens can go inside light guide optical element 112. Opacity filter 114 filters out natural light (either on a per pixel basis or uniformly) to enhance the contrast of the augmented reality imagery. Light guide optical element 112 channels artificial light to the eye.

Mounted to or inside temple 102 is an image source, which (in one embodiment) includes microdisplay 120 for projecting an augmented reality image and lens 122 for directing images from microdisplay 120 into light guide optical element 112. In one embodiment, lens 122 is a collimating lens. An augmented reality emitter can include microdisplay 120, one or more optical components such as the lens 122 and light guide 112, and associated electronics such as a driver. Such an augmented reality emitter is associated with the HMD device, and emits light to a user's eye, where the light represents augmented reality still or video images.

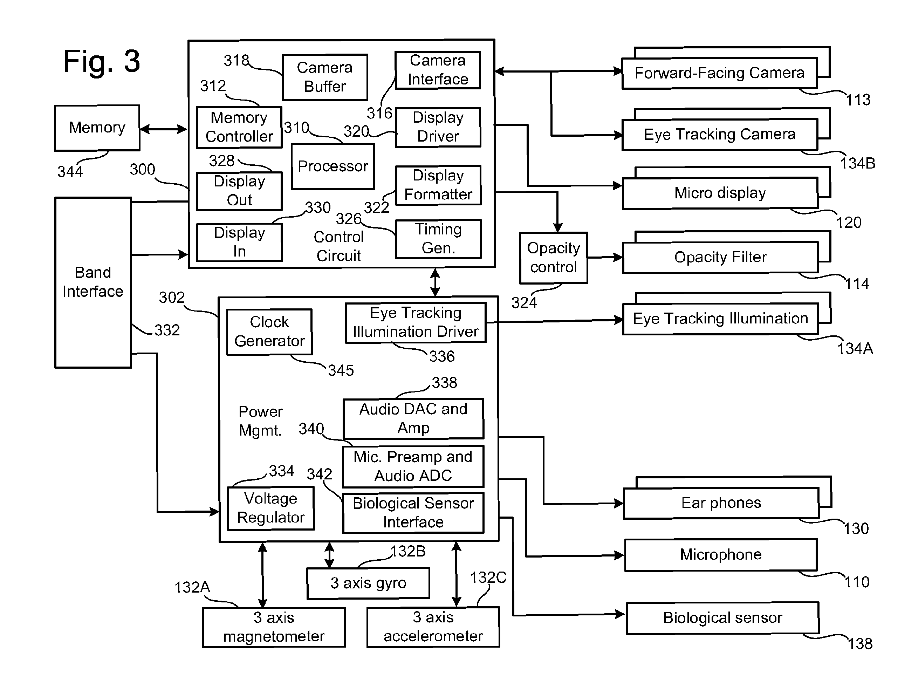

Control circuits 136 provide various electronics that support the other components of HMD device 2. More details of control circuits 136 are provided below with respect to Figure 3. Inside, or mounted to temple 102, are ear phones 130, inertial sensors 132 and biological metric sensor 138. For example, the biological sensor can represent the heart rate sensor components 5 and 7 of Figure 2A. Other biological sensors could be provided to detect a biological metric such as body temperature, blood pressure or blood glucose level. Characteristics of the user's voice such as pitch or rate of speech can also be considered to be biological metrics. The eye tracking camera 134 can also detect a biological metric such as pupil dilation amount in one or both eyes. Heart rate could also be detected from images of the eye which are obtained from eye tracking camera 134. In one embodiment, inertial sensors 132 include a three axis magnetometer 132A, three axis gyro 132B and three axis accelerometer 132C (See Figure 3). The inertial sensors are for sensing position, orientation, sudden accelerations of HMD device 2. For example, the inertial sensors can be one or more sensors which are used to determine an orientation and/or location of user's head.

Microdisplay 120 projects an image through lens 122. Different image generation technologies can be used. For example, with a transmissive projection technology, the light source is modulated by optically active material, and backlit with white light. These technologies are usually implemented using LCD type displays with powerful backlights and high optical energy densities. With a reflective technology, external light is reflected and modulated by an optically active material. The illumination is forward lit by either a white source or RGB source, depending on the technology. Digital light processing (DGP), liquid crystal on silicon (LCOS) and MIRASOL® (a display technology from QUALCOMM®, INC.) are all examples of reflective technologies which are efficient as most energy is reflected away from the modulated structure. With an emissive technology, light is generated by the display. For example, a PicoP™-display engine (available from MICROVISION, INC.) emits a laser signal with a micro mirror steering either onto a tiny screen that acts as a transmissive element or beamed directly into the eye.

Light guide optical element 112 transmits light from microdisplay 120 to the eye 140 of the user wearing the HMD device 2. Light guide optical element 112 also allows light from in front of the HMD device 2 to be transmitted through light guide optical element 112 to eye 140, as depicted by arrow 142, thereby allowing the user to have an actual direct view of the space in front of HMD device 2, in addition to receiving an augmented reality image from microdisplay 120. Thus, the walls of light guide optical element 112 are see-through. Light guide optical element 112 includes a first reflecting surface 124 (e.g., a mirror or other surface). Light from microdisplay 120 passes through lens 122 and is incident on reflecting surface 124. The reflecting surface 124 reflects the incident light from the microdisplay 120 such that light is trapped inside a planar, substrate comprising light guide optical element 112 by internal reflection. After several reflections off the surfaces of the substrate, the trapped light waves reach an array of selectively reflecting surfaces, including example surface 126.

Reflecting surfaces 126 couple the light waves incident upon those reflecting surfaces out of the substrate into the eye 140 of the user. As different light rays will travel and bounce off the inside of the substrate at different angles, the different rays will hit the various reflecting surface 126 at different angles. Therefore, different light rays will be reflected out of the substrate by different ones of the reflecting surfaces. The selection of which light rays will be reflected out of the substrate by which surface 126 is engineered by selecting an appropriate angle of the surfaces 126. More details of a light guide optical element can be found in U.S. Patent Application Publication 2008/0285140, published on November 20, 2008, incorporated herein by reference in its entirety. In one embodiment, each eye will have its own light guide optical element 112. When the HMD device has two light guide optical elements, each eye can have its own microdisplay 120 that can display the same image in both eyes or different images in the two eyes. In another embodiment, there can be one light guide optical element which reflects light into both eyes.

Opacity filter 114, which is aligned with light guide optical element 112, selectively blocks natural light, either uniformly or on a per-pixel basis, from passing through light guide optical element 112. In one embodiment, the opacity filter can be a see-through LCD panel, electrochromic film, or similar device. A see-through LCD panel can be obtained by removing various layers of substrate, backlight and diffusers from a conventional LCD. The LCD panel can include one or more light-transmissive LCD chips which allow light to pass through the liquid crystal. Such chips are used in LCD projectors, for instance.

Opacity filter 114 can include a dense grid of pixels, where the light transmissivity of each pixel is individually controllable between minimum and maximum transmissivities. A transmissivity can be set for each pixel by the opacity filter control circuit 224, described below. More details of an opacity filter are provided in U.S. Patent Application No. 12/887,426, "Opacity Filter For See-Through Mounted Display," filed on September 21, 2010, incorporated herein by reference in its entirety.

In one embodiment, the display and the opacity filter are rendered simultaneously and are calibrated to a user's precise position in space to compensate for angle-offset issues. Eye tracking (e.g., using eye tracking camera 134) can be employed to compute the correct image offset at the extremities ofthe viewing field.

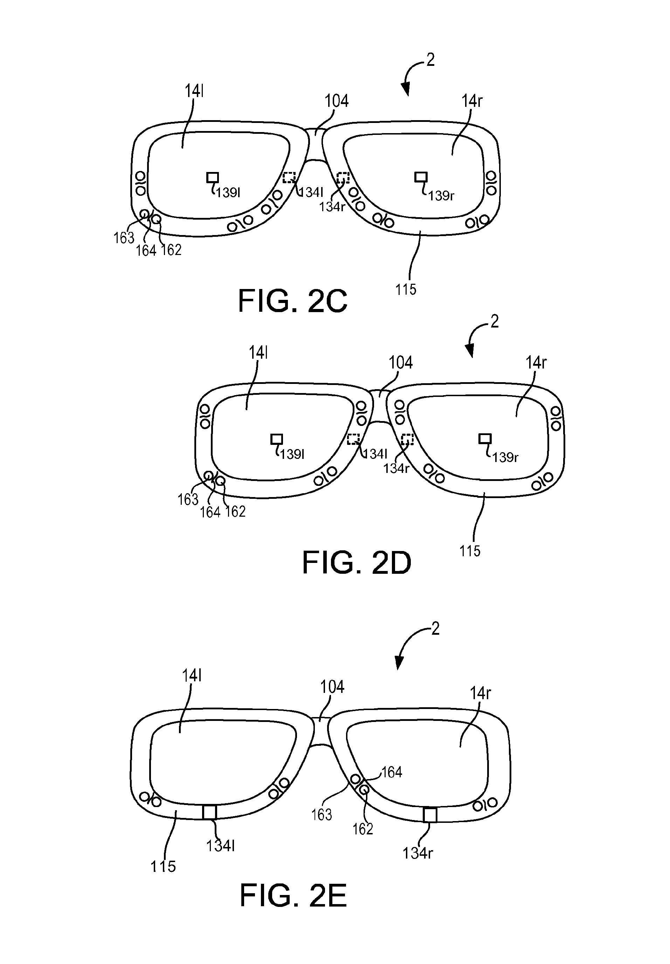

Figure 2C illustrates an exemplary arrangement of positions of respective sets of gaze detection elements in a HMD 2 embodied in a set of eyeglasses. What appears as a lens for each eye represents a display optical system 14 for each eye, e.g. 14r and 141. A display optical system includes a see-through lens, as in an ordinary pair of glasses, but also contains optical elements (e.g. mirrors, filters) for seamlessly fusing virtual content with the actual and direct real world view seen through the lens 6. A display optical system 14 has an optical axis which is generally in the center of the see-through lens in which light is generally collimated to provide a distortionless view. For example, when an eye care professional fits an ordinary pair of eyeglasses to a user's face, a goal is that the glasses sit on the user's nose at a position where each pupil is aligned with the center or optical axis of the respective lens resulting in generally collimated light reaching the user's eye for a clear or distortionless view.

In the example of Figure 2C, a detection area 139r, 1391 of at least one sensor is aligned with the optical axis of its respective display optical system 14r, 141 so that the center of the detection area 139r, 1391 is capturing light along the optical axis. If the display optical system 14 is aligned with the user's pupil, each detection area 139 of the respective sensor 134 is aligned with the user's pupil. Reflected light of the detection area 139 is transferred via one or more optical elements to the actual image sensor 134 of the camera, in this example illustrated by dashed line as being inside the frame 115.

In one example, a visible light camera also commonly referred to as an RGB camera may be the sensor, and an example of an optical element or light directing element is a visible light reflecting mirror which is partially transmissive and partially reflective. The visible light camera provides image data of the pupil of the user's eye, while IR photodetectors 162 capture glints which are reflections in the IR portion of the spectrum. If a visible light camera is used, reflections of virtual images may appear in the eye data captured by the camera. An image filtering technique may be used to remove the virtual image reflections if desired. An IR camera is not sensitive to the virtual image reflections on the eye.

In one embodiment, the at least one sensor 134 is an IR camera or a position sensitive detector (PSD) to which IR radiation may be directed. For example, a hot reflecting surface may transmit visible light but reflect IR radiation. The IR radiation reflected from the eye may be from incident radiation of the illuminators 153, other IR illuminators (not shown) or from ambient IR radiation reflected off the eye. In some examples, sensor 134 may be a combination of an RGB and an IR camera, and the optical light directing elements may include a visible light reflecting or diverting element and an IR radiation reflecting or diverting element. In some examples, a camera may be small, e.g. 2 millimeters (mm) by 2mm. An example of such a camera sensor is the Omnivision OV7727. In other examples, the camera may be small enough, e.g. the Omnivision OV7727, e.g. that the image sensor or camera 134 may be centered on the optical axis or other location of the display optical system 14. For example, the camera 134 may be embedded within a lens of the system 14. Additionally, an image filtering technique may be applied to blend the camera into a user field of view to lessen any distraction to the user.

In the example of Figure 2C, there are four sets of an illuminator 163 paired with a photodetector 162 and separated by a barrier 164 to avoid interference between the incident light generated by the illuminator 163 and the reflected light received at the photodetector 162. To avoid unnecessary clutter in the drawings, drawing numerals are shown with respect to a representative pair. Each illuminator may be an infra-red (IR) illuminator which generates a narrow beam of light at about a predetermined wavelength. Each of the photodetectors may be selected to capture light at about the predetermined wavelength. Infra-red may also include near-infrared. As there can be wavelength drift of an illuminator or photodetector or a small range about a wavelength may be acceptable, the illuminator and photodetector may have a tolerance range about a wavelength for generation and detection. In embodiments where the sensor is an IR camera or IR position sensitive detector (PSD), the photodetectors may be additional data capture devices and may also be used to monitor the operation of the illuminators, e.g. wavelength drift, beam width changes, etc. The photodetectors may also provide glint data with a visible light camera as the sensor 134.

As mentioned above, in some embodiments which calculate a cornea center as part of determining a gaze vector, two glints, and therefore two illuminators will suffice. However, other embodiments may use additional glints in determining a pupil position and hence a gaze vector. As eye data representing the glints is repeatedly captured, for example at 30 frames a second or greater, data for one glint may be blocked by an eyelid or even an eyelash, but data may be gathered by a glint generated by another illuminator.

Figure 2D illustrates another exemplary arrangement of positions of respective sets of gaze detection elements in a set of eyeglasses. In this embodiment, two sets of illuminator 163 and photodetector 162 pairs are positioned near the top of each frame portion 115 surrounding a display optical system 14, and another two sets of illuminator and photodetector pairs are positioned near the bottom of each frame portion 115 for illustrating another example of a geometrical relationship between illuminators and hence the glints they generate. This arrangement of glints may provide more information on a pupil position in the vertical direction.

Figure 2E illustrates yet another exemplary arrangement of positions of respective sets of gaze detection elements. In this example, the sensor 134r, 1341 is in line or aligned with the optical axis of its respective display optical system 14r, 141 but located on the frame 115 below the system 14. Additionally, in some embodiments, the camera 134 may be a depth camera or include a depth sensor. A depth camera may be used to track the eye in 3D. In this example, there are two sets of illuminators 153 and photodetectors 152.

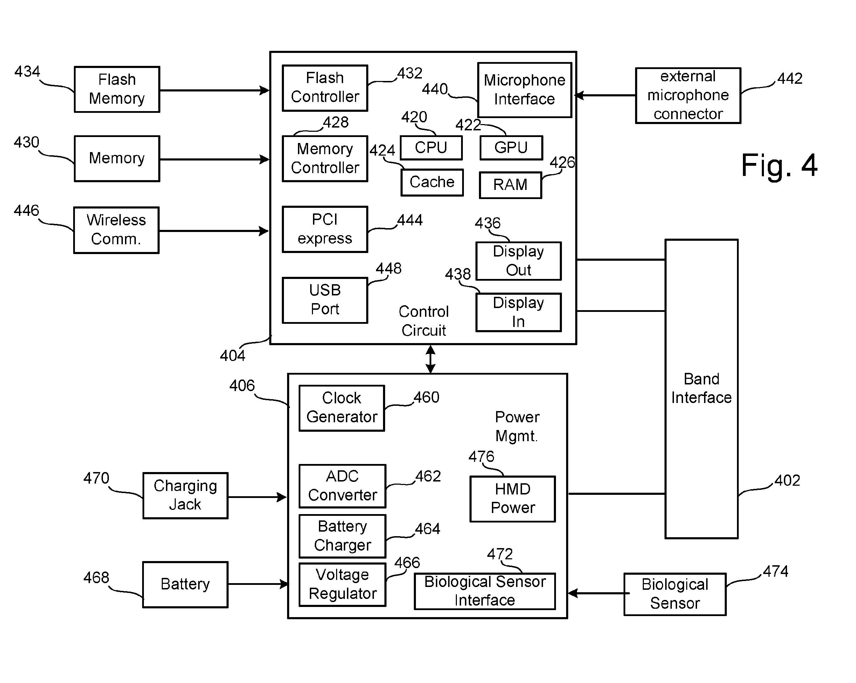

Figure 3 is a block diagram depicting the various components of HMD device 2. Figure 4 is a block diagram describing the various components of processing unit 4. The HMD device components include many sensors that track various conditions. The HMD device will receive instructions about an image (e.g., holographic image) from processing unit 4 and will provide the sensor information back to processing unit 4. Processing unit 4, the components of which are depicted in Figure 4, will receive the sensory information of the HMD device 2. Optionally, the processing unit 4 also receives sensory information from hub computing device 12 (See Figure 2A). Based on that information, processing unit 4 will determine where and when to provide an augmented reality image to the user and send instructions accordingly to the HMD device of Figure 3.

Note that some of the components of Figure 3 (e.g., forward facing camera 113, eye tracking camera 134B, microdisplay 120, opacity filter 114, eye tracking illumination 134A and earphones 130) are shown in shadow to indicate that there are two of each of those devices, one for the left side and one for the right side of HMD device. Regarding the forward-facing camera 113, in one approach, one camera is used to obtain images using visible light.

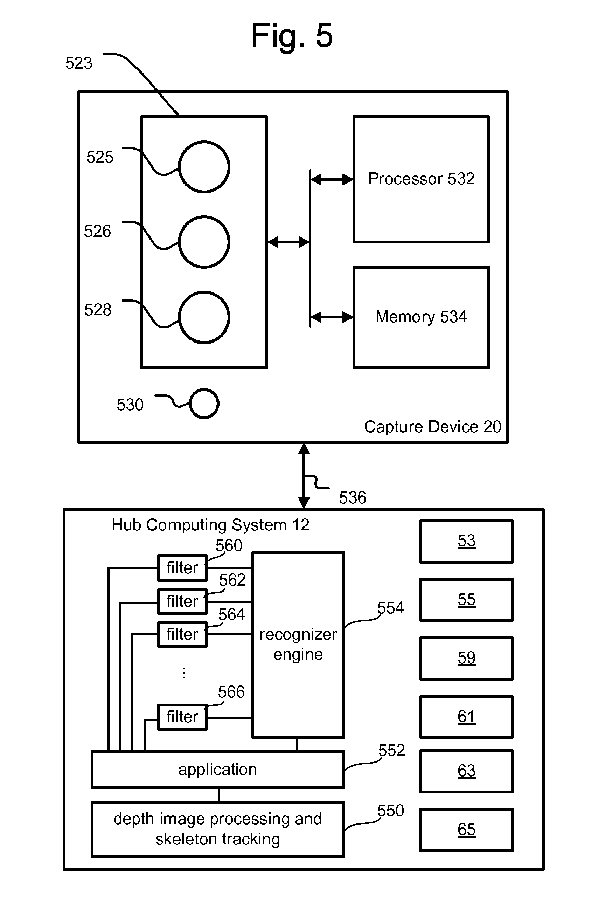

In another approach, two or more cameras with a known spacing between them are used as a depth camera to also obtain depth data for objects in a room, indicating the distance from the cameras/HMD device to the object. The cameras of the HMD device can essentially duplicate the functionality of the depth camera provided by the computer hub 12 (see also capture device 20 of Figure 5).

Figure 3 shows the control circuit 300 in communication with the power management circuit 302. Control circuit 300 includes processor 310, memory controller 312 in communication with memory 344 (e.g., DRAM), camera interface 316, camera buffer 318, display driver 320, display formatter 322, timing generator 326, display out interface 328, and display in interface 330. In one embodiment, all of components of control circuit 300 are in communication with each other via dedicated lines or one or more buses. In another embodiment, each of the components of control circuit 300 is in communication with processor 310. Camera interface 316 provides an interface to the two forward facing cameras 113 and stores images received from the forward facing cameras in camera buffer 318. Display driver 320 drives microdisplay 120. Display formatter 322 provides information, about the augmented reality image being displayed on microdisplay 120, to opacity control circuit 324, which controls opacity filter 114. Timing generator 326 is used to provide timing data for the system. Display out interface 328 is a buffer for providing images from forward facing cameras 112 to the processing unit 4. Display in interface 330 is a buffer for receiving images such as an augmented reality image to be displayed on microdisplay 120.

Display out interface 328 and display in interface 330 communicate with band interface 332 which is an interface to processing unit 4, when the processing unit is attached to the frame of the HMD device by a wire, or communicates by a wireless link, and is worn on the wrist of the user on a wrist band. This approach reduces the weight of the frame-carried components of the HMD device. In other approaches, as mentioned, the processing unit can be carried by the frame and a band interface is not used.

Power management circuit 302 includes voltage regulator 334, eye tracking illumination driver 336, audio DAC and amplifier 338, microphone preamplifier audio ADC 340, biological sensor interface 342 and clock generator 345. Voltage regulator 334 receives power from processing unit 4 via band interface 332 and provides that power to the other components of HMD device 2. Eye tracking illumination driver 336 provides the infrared (IR) light source for eye tracking illumination 134A, as described above. Audio DAC and amplifier 338 receives the audio information from earphones 130. Microphone preamplifier and audio ADC 340 provides an interface for microphone 110. Biological sensor interface 342 is an interface for biological sensor 138. Power management unit 302 also provides power and receives data back from three-axis magnetometer 132A, three-axis gyroscope 132B and three axis accelerometer 132C.

Figure 4 is a block diagram describing the various components of processing unit 4. Control circuit 404 is in communication with power management circuit 406. Control circuit 404 includes a central processing unit (CPU) 420, graphics processing unit (GPU) 422, cache 424, RAM 426, memory control 428 in communication with memory 430 (e.g., DRAM), flash memory controller 432 in communication with flash memory 434 (or other type of non-volatile storage), display out buffer 436 in communication with HMD device 2 via band interface 402 and band interface 332 (when used), display in buffer 438 in communication with HMD device 2 via band interface 402 and band interface 332 (when used), microphone interface 440 in communication with an external microphone connector 442 for connecting to a microphone, Peripheral Component Interconnect (PCI) express interface 444 for connecting to a wireless communication device 446, and USB port(s) 448.

In one embodiment, wireless communication component 446 can include a Wi-Fi® enabled communication device, BLUETOOTH® communication device, infrared communication device, etc. The wireless communication component 446 is a wireless communication interface which, in one implementation, receives data in synchronism with the content displayed by the audiovisual device 16. Further, augmented reality images may be displayed in response to the received data. In one approach, such data is received from the hub computing system 12.

The USB port can be used to dock the processing unit 4 to hub computing device 12 to load data or software onto processing unit 4, as well as charge processing unit 4. In one embodiment, CPU 420 and GPU 422 are the main workhorses for determining where, when and how to insert images into the view of the user. More details are provided below.

Power management circuit 406 includes clock generator 460, analog to digital converter 462, battery charger 464, voltage regulator 466, HMD power source 476, and biological sensor interface 472 in communication with biological sensor 474. Analog to digital converter 462 is connected to a charging jack 470 for receiving an AC supply and creating a DC supply for the system. Voltage regulator 466 is in communication with battery 468 for supplying power to the system. Battery charger 464 is used to charge battery 468 (via voltage regulator 466) upon receiving power from charging jack 470. HMD power source 476 provides power to the HMD device 2.

The calculations that determine where, how and when to insert an image may be performed by the HMD device 2 and/or the hub computing device 12.

In one example embodiment, hub computing device 12 will create a model of the environment that the user is in and track various moving objects in that environment. In addition, hub computing device 12 tracks the field of view of the HMD device 2 by tracking the position and orientation of HMD device 2. The model and the tracking information are provided from hub computing device 12 to processing unit 4. Sensor information obtained by HMD device 2 is transmitted to processing unit 4. Processing unit 4 then uses additional sensor information it receives from HMD device 2 to refine the field of view of the user and provide instructions to HMD device 2 on how, where and when to insert the image.

Figure 5 illustrates an example embodiment of the hub computing system 12 and the capture device 20 of Figure 2A. According to an example embodiment, capture device 20 may be configured to capture video with depth information including a depth image that may include depth values via any suitable technique including, for example, time-of-flight, structured light, stereo image, or the like. According to one embodiment, the capture device 20 may organize the depth information into "Z layers," or layers that may be perpendicular to a Z axis extending from the depth camera along its line of sight.

Capture device 20 may include a camera component 523, which may be or may include a depth camera that may capture a depth image of a scene. The depth image may include a two-dimensional (2-D) pixel area of the captured scene where each pixel in the 2-D pixel area may represent a depth value such as a distance in, for example, centimeters, millimeters, or the like of an object in the captured scene from the camera.

Camera component 523 may include an infrared (IR) light component 525, an infrared camera 526, and an RGB (visual image) camera 528 that may be used to capture the depth image of a scene. A 3-D camera is formed by the combination of the infrared emitter 24 and the infrared camera 26. For example, in time-of-flight analysis, the IR light component 525 of the capture device 20 may emit an infrared light onto the scene and may then use sensors (in some embodiments, including sensors not shown) to detect the backscattered light from the surface of one or more targets and objects in the scene using, for example, the 3-D camera 526 and/or the RGB camera 528. In some embodiments, pulsed infrared light may be used such that the time between an outgoing light pulse and a corresponding incoming light pulse may be measured and used to determine a physical distance from the capture device 20 to a particular location on the targets or objects in the scene. Additionally, the phase of the outgoing light wave may be compared to the phase of the incoming light wave to determine a phase shift. The phase shift may then be used to determine a physical distance from the capture device to a particular location on the targets or objects.

A time-of-flight analysis may be used to indirectly determine a physical distance from the capture device 20 to a particular location on the targets or objects by analyzing the intensity of the reflected beam of light over time via various techniques including, for example, shuttered light pulse imaging.

The capture device 20 may use a structured light to capture depth information. In such an analysis, patterned light (i.e., light displayed as a known pattern such as grid pattern, a stripe pattern, or different pattern) may be projected onto the scene via, for example, the IR light component 525. Upon striking the surface of one or more targets or objects in the scene, the pattern may become deformed in response. Such a deformation of the pattern may be captured by, for example, the 3-D camera 526 and/or the RGB camera 528 (and/or other sensor) and may then be analyzed to determine a physical distance from the capture device to a particular location on the targets or objects. In some implementations, the IR light component 525 is displaced from the cameras 526 and 528 so triangulation can be used to determined distance from cameras 526 and 528. In some implementations, the capture device 20 will include a dedicated IR sensor to sense the IR light, or a sensor with an IR filter.

The capture device 20 may include two or more physically separated cameras that may view a scene from different angles to obtain visual stereo data that may be resolved to generate depth information. Other types of depth image sensors can also be used to create a depth image.

The capture device 20 may further include a microphone 530, which includes a transducer or sensor that may receive and convert sound into an electrical signal. Microphone 530 may be used to receive audio signals that may also be provided by hub computing system 12.

A processor 532 is in communication with the image camera component 523. Processor 532 may include a standardized processor, a specialized processor, a microprocessor, or the like that may execute instructions including, for example, instructions for receiving a depth image, generating the appropriate data format (e.g., frame) and transmitting the data to hub computing system 12.

A memory 534 stores the instructions that are executed by processor 532, images or frames of images captured by the 3-D camera and/or RGB camera, or any other suitable information, images, or the like. According to an example embodiment, memory 534 may include RAM, ROM, cache, flash memory, a hard disk, or any other suitable storage component. Memory 534 may be a separate component in communication with the image capture component 523 and processor 532. According to another embodiment, the memory 534 may be integrated into processor 532 and/or the image capture component 523.

Capture device 20 is in communication with hub computing system 12 via a communication link 536. The communication link 536 may be a wired connection including, for example, a USB connection, a FireWire connection, an Ethernet cable connection, or the like and/or a wireless connection such as a wireless 802.11b, g, a, or n connection. According to one embodiment, hub computing system 12 may provide a clock to capture device 20 that may be used to determine when to capture, for example, a scene via the communication link 536. Additionally, the capture device 20 provides the depth information and visual (e.g., RGB or other color) images captured by, for example, the 3-D camera 526 and/or the RGB camera 528 to hub computing system 12 via the communication link 536. In one embodiment, the depth images and visual images are transmitted at 30 frames per second; however, other frame rates can be used. Hub computing system 12 may then create and use a model, depth information, and captured images to, for example, control an application such as a game or word processor and/or animate an avatar or on-screen character.

Hub computing system 12 includes depth image processing and skeletal tracking module 550, which uses the depth images to track one or more persons detectable by the depth camera function of capture device 20. Module 550 provides the tracking information to application 552, which can be educational software, a video game, productivity application, communications application or other software application etc. The audio data and visual image data is also provided to application 552 and module 550. Application 552 provides the tracking information, audio data and visual image data to recognizer engine 554. In another embodiment, recognizer engine 554 receives the tracking information directly from module 550 and receives the audio data and visual image data directly from capture device 20.

Recognizer engine 554 is associated with a collection of filters 560, 562, 564, ..., 566 each comprising information concerning a gesture, action or condition that may be performed by any person or object detectable by capture device 20. For example, the data from capture device 20 may be processed by filters 560, 562, 564, ..., 566 to identify when a user or group of users has performed one or more gestures or other actions. Those gestures may be associated with various controls, objects or conditions of application 552. Thus, hub computing system 12 may use the recognizer engine 554, with the filters, to interpret and track movement of objects (including people).

Capture device 20 provides RGB images (or visual images in other formats or color spaces) and depth images to hub computing system 12. The depth image may be a set of observed pixels where each observed pixel has an observed depth value. For example, the depth image may include a two-dimensional (2-D) pixel area of the captured scene where each pixel in the 2-D pixel area may have a depth value such as distance of an object in the captured scene from the capture device. Hub computing system 12 will use the RGB images and depth images to track a user's or object's movements.

Hub computing system 12 also has modules for eye tracking 53, environmental modeling 55, HMD content display 59, feedback 61, biometric analyzer 63, and error detection/correction 65, which have been described with respect to Figure 2D.

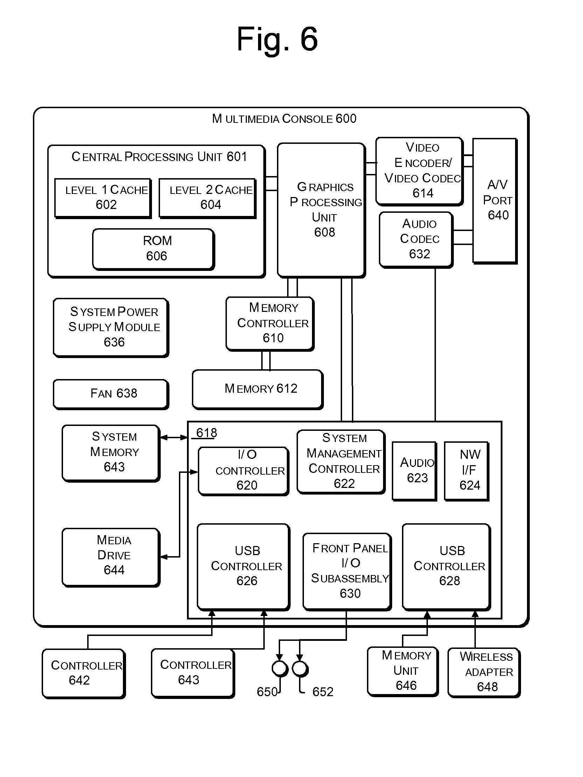

Figure 6 illustrates an example embodiment of a computing system that may be used to implement hub computing system 12. As shown in Figure 6, the multimedia console 600 has a central processing unit (CPU) 601 having a level 1 cache 602, a level 2 cache 604, and a flash ROM 606. The level 1 cache 602 and a level 2 cache 604 temporarily store data and hence reduce the number of memory access cycles, thereby improving processing speed and throughput. CPU 601 may be provided having more than one core, and thus, additional level 1 and level 2 caches 602 and 604. The flash ROM 606 may store executable code that is loaded during an initial phase of a boot process when the multimedia console 600 is powered on.

A GPU 608 and a video encoder/video codec (coder/decoder) 614 form a video processing pipeline for high speed and high resolution graphics processing. Data is carried from the graphics processing unit 608 to the video encoder/video codec 614 via a bus. The video processing pipeline outputs data to an A/V (audio/video) port 640 for transmission to a television or other display. A memory controller 610 is connected to the GPU 608 to facilitate processor access to various types of memory 612, e.g., RAM.

The multimedia console 600 includes an I/O controller 620, a system management controller 622, an audio processing unit 623, a network (NW) interface (I/F) 624, a first USB host controller 626, a second USB controller 628 and a front panel I/O subassembly 630 that are preferably implemented on a module 618. The USB controllers 626 and 628 serve as hosts for peripheral controllers 642 and 643, a wireless adapter 648, and an external memory device 646 (e.g., flash memory, external CD/DVD ROM drive, removable media, etc.). The network interface 624 and/or wireless adapter 648 provide access to a network (e.g., the Internet, home network, etc.) and may be any of a wide variety of various wired or wireless adapter components including an Ethernet card, a modem, a BLUETOOTH® module, a cable modem, and the like.

System memory 643 is provided to store application data that is loaded during the boot process. A media drive 644 is provided and may comprise a DVD/CD drive, Blu-Ray disk(TM) drive, hard disk drive, or other removable media drive, etc. The media drive 644 may be internal or external to the multimedia console 600. Application data may be accessed via the media drive 644 for execution, playback, etc. by the multimedia console 600. The media drive 644 is connected to the I/O controller 620 via a bus, such as a Serial ATA bus or other high speed connection (e.g., IEEE 1394 serial bus interface).

The system management controller 622 provides a variety of service functions related to assuring availability of the multimedia console 600. The audio processing unit 623 and an audio codec 632 form a corresponding audio processing pipeline with high fidelity and stereo processing. Audio data is carried between the audio processing unit 623 and the audio codec 632 via a communication link. The audio processing pipeline outputs data to the A/V port 640 for reproduction by an external audio user or device having audio capabilities.

The front panel I/O subassembly 630 supports the functionality of the power button 650 and the eject button 652, as well as any LEDs (light emitting diodes) or other indicators exposed on the outer surface of the multimedia console 600. A system power supply module 636 provides power to the components of the multimedia console 600. A fan 638 cools the circuitry within the multimedia console 600.

The CPU 601, GPU 608, memory controller 610, and various other components within the multimedia console 600 are interconnected via one or more buses, including serial and parallel buses, a memory bus, a peripheral bus, and a processor or local bus using any of a variety of bus architectures. Such architectures can include a PCI bus, PCI-Express bus, etc.

When the multimedia console 600 is powered on, application data may be loaded from the system memory 643 into memory 612 and/or caches 602, 604 and executed on the CPU 601. The application may present a graphical user interface that provides a consistent user experience when navigating to different media types available on the multimedia console 600. In operation, applications and/or other media contained within the media drive 644 may be launched or played from the media drive 644 to provide additional functionalities to the multimedia console 600.

The multimedia console 600 may be operated as a standalone system by simply connecting the system to a television or other display. In this standalone mode, the multimedia console 600 allows one or more users to interact with the system, watch movies, or listen to music. However, with the integration of broadband connectivity made available through the network interface 624 or the wireless adapter 648, the multimedia console 600 may further be operated as a participant in a larger network community. Additionally, multimedia console 600 can communicate with processing unit 4 via wireless adaptor 648.

Figure 2A, discussed previously, depicts one HMD device 2 (considered to be a type of mobile terminal) in communication with one hub computing device 12 (referred to as a hub). In another embodiment, multiple mobile terminals can be in communication with a single hub. Each of the mobile terminals will communicate with the hub using wireless communication, as described above. In such an embodiment, much of the information that is useful to all of the mobile terminals can be computed and stored at the hub and transmitted to each of the mobile terminals. For example, the hub will generate the model of the environment and provide that model to all of the mobile terminals in communication with the hub. Additionally, the hub can track the location and orientation of the mobile terminals and of the moving objects in the room, and then transfer that information to each of the mobile terminals.

Figure 7 is a flowchart of one embodiment of a process of providing a teacher 13(a) with information regarding a student 13(b). This process might be used in a classroom teaching environment, but is not so limited. In step 702, the eye gaze of the teacher 13(a) is detected. In one embodiment, the HMD 2 has one or more sensors (e.g., IR photodetectors 162 Figure 2C-2E) for detecting eye glints that may be used to determine the direction in which the eye is positioned. Image sensor or camera 134 (see FIGs. 2A-2E) may also be used. The computer system 12 may determine an eye vector for each eye from the foregoing. In order to make the eye vectors relevant, the computer system 12 may access a 3D model of the room and correlate the eye vectors to the 3D model. The computer system 12 may develop the 3D model of the classroom using any camera system. In one embodiment, the HMD 2 has a front facing camera, which may collect data for the 3D model. However, any device could have the camera for capturing data for the 3D model. As noted, the computer system 12 can determine where the teacher 13(a) is looking by correlating the eye vectors to the 3D model.

In step 704, the computer system 12 determines which student 13(b) the teacher 13(a) is looking at. The 3D model of the classroom may include, or be augmented with, the position of each student 13(b). In one embodiment, the HMD 2 of each student 13(b) can uniquely be identified by a signal it transmits or by some physical marker. In one embodiment, each seat in the classroom has a known 3D position, and the computer system 12 knows which student 13(b) is expected to be in each seat. Many other techniques could be used. Steps 702-704 are one embodiment of step 150.

In step 706, information regarding the student 13(b) is determined. In one embodiment, the computer system 12 accesses a profile database 75(2) to retrieve student GPA, name, etc. In one embodiment, the computer system 12 reports whether the student 13(b) comprehends the material or is paying attention. Further details of making this determination are discussed below. Step 706 is one embodiment of step 152.

In step 708, the teacher 13(a) is provided with the information regarding the student 13(b). This information may be provided on the teacher's HMD 2. The information could be audio or visual. Step 708 is one embodiment of step 154.

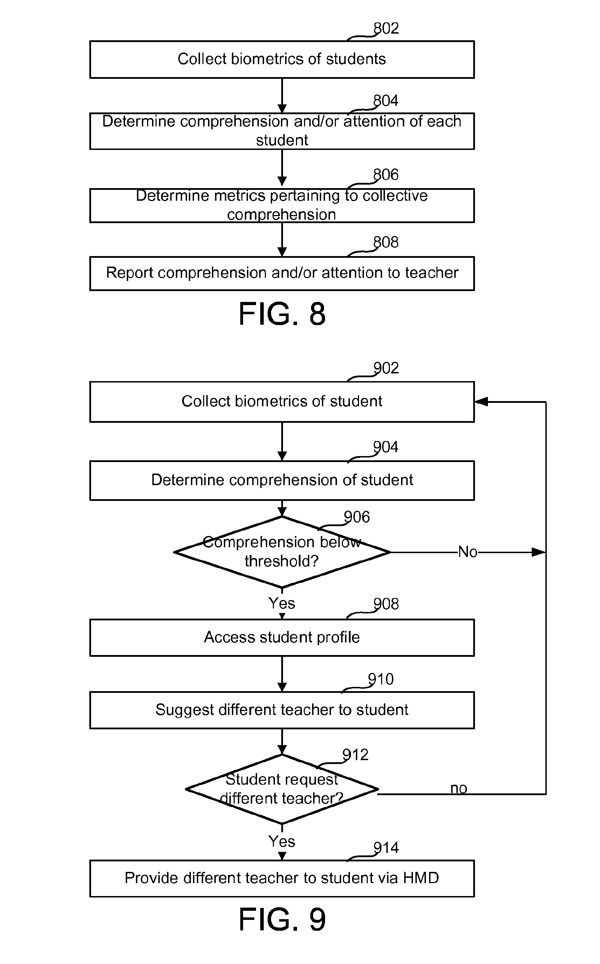

Figure 8 is a flowchart of one embodiment of a process of providing a teacher 13(a) with information regarding a student 13(b). This process might be used in a classroom teaching environment, but is not so limited. In step 802, biometric data pertaining to one or more of the students 13(b) is collected. In one embodiment, the HMD 2 has one or more sensors for detecting biometric information. However, other sensors could be used. In one embodiment, the information includes 3D image data from which emotions could be detected. The biometric data could be used to determine a direction of eye gaze, from which attention might be inferred. The biometric data could include heart rate data. Figure 2A discussed one example of a heart rate sensor; however, others could be used. Step 802 is one embodiment of step 150.

In step 804, the system determines comprehension and/or attention of the one or more students 13(b). In one embodiment, 3D image data is analyzed to determine facial expressions of a student 13(b), from which comprehension may be inferred. In one embodiment, eye tracking is used to estimate whether the student is paying attention to the lesson or possibly something else. For example, the student might be spending substantial time looking out the window. Note that steps 802 and 804 may be performed over any time interval. Step 804 is one embodiment of step 152.

In step 806, the computer system 12 determines metrics pertaining to collective comprehension ofthe students 13(b). For example, the computer system 12 may determine what percentage of the students 13(b) comprehend the subject matter. The computer system 12 may determine what portions of the subject matter are understood and which are not. Levels of comprehension may be used to express results. Step 806 is one embodiment of step 152.

In step 808, the teacher 13(a) is provided with information regarding comprehension and/or attention. This may be the information from step 804 and/or 806. This information may be provided on the teacher's HMD 2. Step 808 is one embodiment of step 154.

In one embodiment, the computer system 12 determines whether or not a student has completed some task, problem, assignment, etc. This may be similar to the process of Figure 8. However, instead of determining comprehension, the system uses sensor information to determine task completion. As one example, the HMD 2 may have a front facing camera that is able to determine a 3D image of the student's desk. The 3D image may be analyzed to determine whether the student has completed a math problem, as one of many possibilities.

Figure 9 is a flowchart of one embodiment of a process of providing a different teacher to a student. As one example, the student 13(b) may not be comprehending the lecture being presented by the teacher 13(a) and may be offered the option of viewing a lecture by a different teacher on the HMD 2. This process might be used in a classroom teaching environment, but is not so limited.

In step 902, biometric data pertaining to one or more of the students 13(b) is collected. Step 902 is one embodiment of step 150. In step 904, the biometric data is analyzed to determine comprehension by the student 13(b). Steps 902-904 may be similar to steps 802-804. In step 906, a determination is made whether the comprehension is below a threshold. For example, comprehension might be rated on a scale based on experimental data from test subjects by correlating facial expressions to stated or tested levels of comprehension. If the comprehension is below a threshold, then the student 13(b) may be offered the option of a new teacher 13(a).

In step 908, a student profile is accessed from database 57(2). The student profile may have been developed, at least in part, by the computer system 12. However, the student profile may be developed, at least in part, without aid of the computer system 12. The user profile may indicate known learning styles of the student, as one example. For example, some students may prefer a linear learning style, whereas others prefer s non-linear learning style. As another example, a student 13(b) may have a preference for visual, aural or text based learning. Steps 904-908 are one embodiment of step 152 from Figure 1E.

In step 910, a different teacher 13(a) is suggested to the student 13(b) based on their user profile. The student 13(b) might be presented with one or more possible teachers 11 to choose from, possibly with a brief description of that teacher 13(a) or why they are being suggested for this student 13(b).

In step 912, the student 13(b) may select a new teacher 13(a). If so, then in step 914, the selected teacher 13(a) is provided to the student 13(b). In one embodiment, the computer system 12 accesses a lecture given by the selected teacher 13(a) from database 57(3). This could be a video recording, which is provided on the HMD 2, along with audio. Note that the student 13(b) may choose to pause, fast forward, rewind, etc. the video recording. Step 914 is one embodiment of step 154 from Figure 1E.

A variation of the process of Figure 9 is to provide a lesson that is tailored to the student 13(b). For example, the rate at which a student 13(b) is comfortable with material being presented may be accessed from student profile database 57(2). The step of testing comprehension (step 906) may factor in to the determination of what rate the student is comfortable with. A suitable lesson for this subject matter can be accessed from database 57(3). This lesson could be a pre-recorded video; however, this other formats are not precluded.

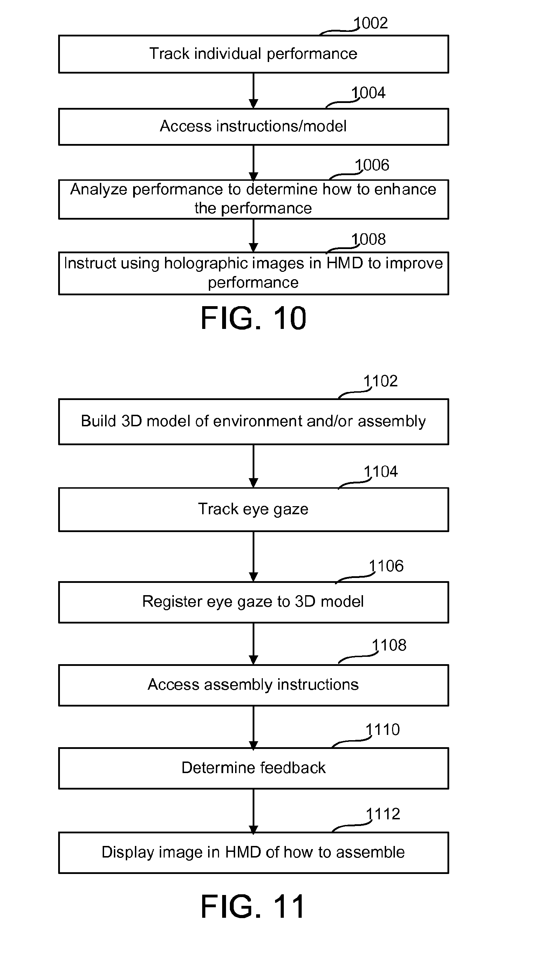

Figure 10 is a flowchart of one embodiment of a process of providing holographic instruction. The instruction may have many purposes such as helping an individual 13 to assemble some apparatus. For example, the individual 13 may have purchased a product that requires assembly. Another possible use to teach the individual 13 how to swing a golf club by showing them a holographic image of their own golf swing. In one embodiment, the images that are presented are holographic. The individual may be able to manipulate or "walk around" the images to see the image from a different perspective. The process of Figure 10 may be used in the example environment of Figure 1B, but is not so limited. The process is one embodiment of the process of Figure 1E.

In step 1002, individual performance is tracked. In one embodiment, sensor data is processed to determine information indicative of performance of the individual. The interaction might be the individual 13 assembling a product, swinging a golf club, a playing music, baking a cake, as a few examples. In step 1002, one or more cameras may be used to build a 3D model. Also, other sensors such as those to capture audio may be used. Step 1002 is one embodiment of step 150 from Figure 1E.

In optional step 1004, instructions and/or a model for the performance is accessed. For example, a model of what the assembled product or step by step instructions for assembly may be accessed from database 57(n). As noted above, this may involve access over a network, such as the Internet.

In step 1006, the performance is analyzed to determine how to enhance the individual's performance. The analysis may include determining correctness of the assembly of the product, analysis of flaws in a golf swing, determination of the next note to play in a song, how to bake a cake, etc. Step 1006 is one embodiment of step 152 from Figure 1E.

In step 1008, instruction (e.g., holographic instruction) is provided in the HMD 2. For example, the individual 13 is shown a holographic image of two pieces that should be connected together. The holographic image may show the two pieces at first separated, and then coming together. In one embodiment, the individual 13 can manipulate the image by "picking up" a virtual object. As another example, the individual is able to walk around a holographic image of their golf swing and receive feedback as to swing flaws. In one embodiment, a holographic image is presented to demonstrate the next step in baking a cake. Step 1008 is one embodiment of step 154 from Figure 1E.

In one embodiment of step 1008, the individual 13 is permitted to ask for help or instructions. For example, the individual 13 might utter a key word such as "instruct", which triggers the computer system 12 to provide instructions. In one embodiment of step 1008, the individual 13 uses some physical gesture to request help. Multiple gestures and/or voice commands may be used for different requests. Note that gestures and/or voice commands may be used to request help for other embodiments discussed herein.

Figure 11 is a flowchart of one embodiment of a process of providing holographic instruction to assemble an apparatus. The process is one embodiment of the process of Figure 10. The process is one also one embodiment of the process of Figure 1E. Note that in this embodiment, the instructions may be well structured; however, this is not a requirement.

In step 1102, a 3D model ofthe individual's environment is built. More specifically, a 3D model of the product being assembled may be built based on image data captured from sensors. In step 1104, the individual's eye gaze is determined. In step 1106, the eye gaze is registered to the 3D model. For example, eye vectors are correlated to a 3D position to determine what the individual 13 is looking at. Steps 1102-1106 are one embodiment of step 1002, as well as one embodiment of step 150.

In step 1108, instructions for assembling the product and/or a model of what the assembled product should look like are accessed from database 57(n). Note that this may be accessed via a network. In one embodiment, the product manufacturer provides such instructions and/or a model on a web site. Step 1108 is one embodiment of step 1004.

In step 1110, feedback is determined. Step 1112 may include comparing the individual's version of the assembled product (at this stage) with the accessed 3D model to determine errors. For example, if the individual is on step three, and the computer system 12 determines that the model is not being assembled correctly a suitable warning may be determined. The computer system 12 might also determine a possible remedy. For example, the computer system 12 might determine that step two was missed by the individual 13. If the individual 13 has stopped assembling, the system might determine whether too much time has passed, which may suggest the individual 13 is stuck. Step 1110 is one embodiment of step 1006, as well as one embodiment of step 152.

In step 1112, an image is provided in the HMD 2 to provide feedback. For example, the individual 13 is shown a holographic image of two pieces that should be connected together. The holographic image may show the two pieces at first separated, and then coming together. Step 1112 may also include providing audio feedback. For example, the system could say, "I think that you skipped step two." In this case, step two could be presented as a holographic image in the HMD 2. Note that this holographic image may be an animation. The system might ask the individual 13 if they are stuck and need help.

In one embodiment, step 1112 includes providing a holographic image that the individual can view from different perspectives by moving either a virtual object or moving their vantage point. For example, the individual might pick up one or more virtual objects being presented in the HMD 2 and manipulate those objects. Sensors are able to track the individuals hand positions to determine how to display the virtual objects. Step 1112 is one embodiment of step 1008, as well as step 154.

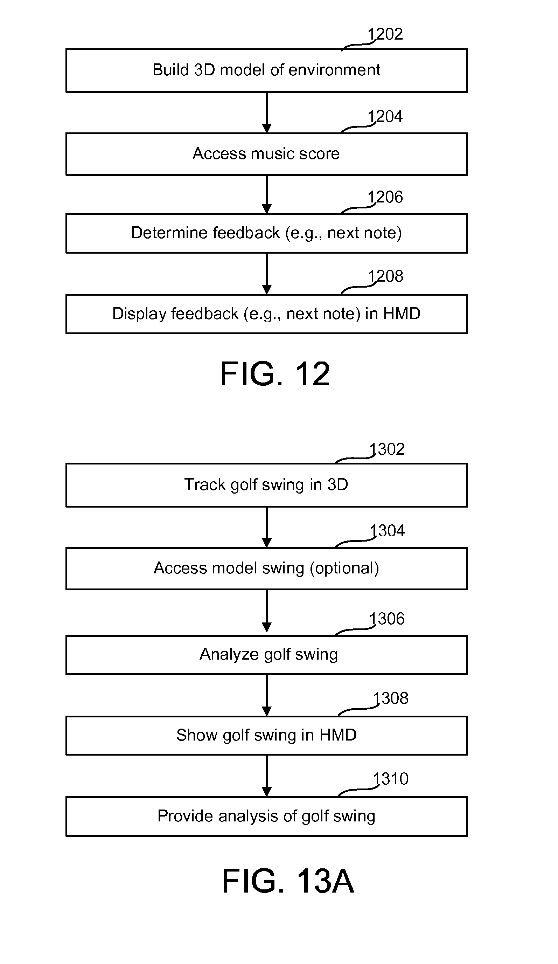

Figure 12 is a flowchart of one embodiment of a process of providing holographic instruction when playing music. The process is one embodiment of the process of Figure 10. The process is also one embodiment of the process of Figure 1E.

In step 1202, a 3D model ofthe individual's environment is built. More specifically, a 3D model of an instrument being played may built from image data captured from sensors. The computer system 12 may also determine how the user is interacting with the instrument. For example, the computer system 12 may determine what notes the user is playing on the piano. This may be performed using an audio sensor or by analyzing an image. In step 1202, the computer system 12 may also determine how the HMD 2 is oriented relative to the instrument such that later an image can be presented that matches up with the instrument. For example, a key on a piano can be highlighted by providing a holographic image in the HMD 2. Step 1202 is one embodiment of step 1002, as well as one embodiment of step 150.

In step 1204, a music score is accessed from a database 57. This may be the music being played. Step 1204 is one embodiment of step 1004.

In step 1206, feedback is determined. Step 1206 may include determining which note to play next, determining that an incorrect note was played, determining that fingers are being positioned incorrectly on the guitar strings, etc. Step 1206 is one embodiment of step 1006, as well as one embodiment of step 152.

In step 1208, an image is provided in the HMD 2 to provide feedback. For example, the individual 13 is shown a holographic image that indicates which note to play next. The individual 13 might be shown a holographic image of how they were positioning their fingers on the guitar strings followed by a holographic image of how they should be positioned. Step 1208 may also include providing audio feedback. Step 1208 is one embodiment of step 1008, as well as one embodiment of step 154.

Figure 13A is a flowchart of one embodiment of a process of providing holographic instruction for sports. The process is one embodiment of the process of Figure 10. The process is one also one embodiment of the process of Figure 1E.

In step 1302, a 3D model of the individual's golf swing is built from image data captured from sensors. This may be similar to building a 3D model of an environment that is discussed elsewhere herein. The individual 13 typically is not wearing the HMD 2 when swinging the golf club, but that is a possibility. The 3D model may be built based on images captured by one or more cameras. In one embodiment, either the 3D model or simply a 2D video stream is stored in database 57(1), such that it is available for a teacher 13(a) to analyze. Step 1302 is one embodiment of step 1002, as well as one embodiment of step 150.

In optional step 1304, a stored model of a golf swing is accessed. This model may be a template for comparison purposes with the individual's swing. Rather than accessing a predefined model, a model might be generated on the fly, based on user parameters, the selected club, type of shot (draw, fade, etc.). Also, note that there is typically not one accepted model for a golf swing. Moreover, note that the model could be for any portion of the golf swing (e.g., address position, position at top, position in hitting zone, etc.).

In step 1306, the golf swing is analyzed. Step 1306 may be performed by software running on computer system 12. In one embodiment, the computer system 12 compares the individual's swing with the model accessed in step 1304. Step 1306 may be performed by a human teacher. The analysis could be a critique of where the swing is going wrong, a deviation from the swing and an ideal (e.g., model swing) etc. Step 1306 is one embodiment of step 1006, as well as one embodiment of step 154.

In step 1308, a holographic image of the golf swing is provided in the HMD 2. This image may be a still image of any selected portion of the golf swing or a video stream. In step 1310 analysis of the golf swing is provided. Thus, the individual receives instruction. In one embodiment, the holographic image highlights some region (e.g., right wrist position) to show the individual what needs to be corrected. The image may also show the individual the correct (or better) position for the wrist. Step 1308 may include providing a holographic image that the individual can view from different perspectives by moving their vantage point. In one embodiment, audio commentary is provided while the individual is permitted to "walk around" the holographic image to examine the golf swing from different perspectives. The individual's location may be determined by tracking cameras and/or GPS. Tracking cameras can be used to determine a precise 3D coordinate for the individual's eyes. Steps 1308-1310 are one embodiment of step 1008, as well as one embodiment of step 154.

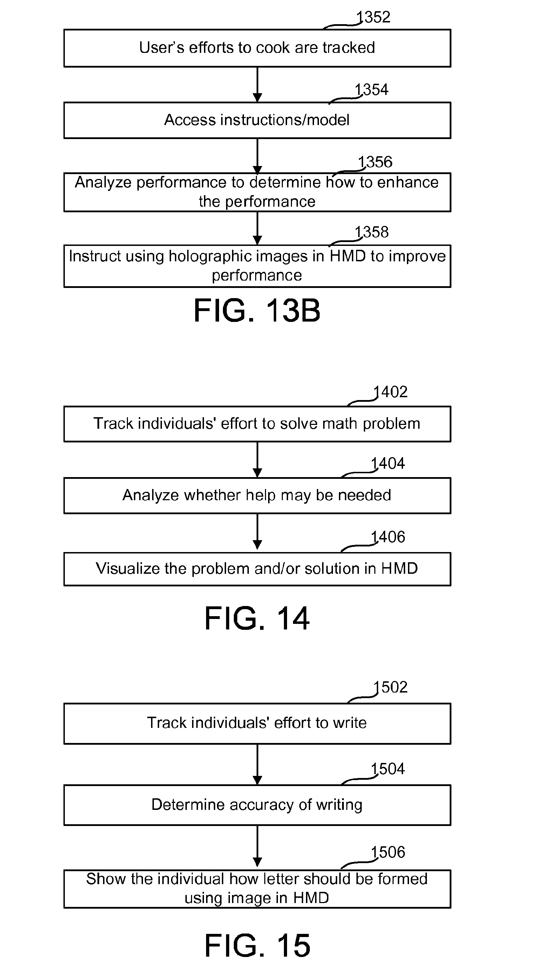

Figure 13B is a flowchart of one embodiment of a process of providing holographic instruction for helping a user to cook. Note that this is one example in which the instructions may be relatively unstructured. For example, there is not necessarily a set of instructions that would likely be the same for all people. This is in contrast to en example such as assembling a product, which may have more structured instructions. A reason why cooking instructions may be unstructured is due to different abilities of users. For example, some may need detailed instructions on how to poach an egg, whereas other can simply be told to poach an egg. The process is one embodiment of the process of Figure 10.

In step 1352, efforts of the wearer of the HMD 2 to cook are tracked. In one embodiment, sensor data is processed to determine information indicative of performance of the individual. In step 1352, one or more cameras on the HMD 2 may be used. Step 1352 is one embodiment of step 150 from Figure 1E. Step 1352 is one embodiment of step 1302 from Figure 10.

In step 1354, instructions for cooking are accessed. As noted above, this may involve access over a network, such as the Internet.

In step 1356, the progress in cooking is analyzed to determine how to enhance the individual's performance. The analysis may include determining where the individual 13 is in the process to determine the next step, determining whether the process is being performed correctly, etc. Step 1356 is one embodiment of step 152 from Figure 1E. Step 1356 is one embodiment of step 1006 from Figure 10.

In step 1356, instruction (e.g., holographic instruction) is provided in the HMD 2 to help the user to cook. For example, the individual 13 is shown a holographic image of the next step in the cooking process. In one embodiment, the individual 13 can manipulate the holographic image. For example, the individual 13 could perform a dry run through of practicing to slice up radishes in a fancy pattern. Step 1356 may include providing audio advice. For example, an audio signal can be played in the HMD 2 to go to the cupboard and get some flour. Step 1356 is one embodiment of step 154 from Figure 1E. Step 1356 is one embodiment of step 1008 from Figure 10.

Figure 14 is a flowchart of one embodiment of a process of providing instruction to help an individual solve a problem. An example of a math problem will be used, but the problem could be with another subject such as physics, chemistry, or even a field outside of science or mathematics. The process is one embodiment of the process of Figure 10. The process is one also one embodiment ofthe process of Figure 1E. Note that the process may be performed in a classroom setting such as depicted in Figure 1A.

In step 1402, an individual's efforts to solve a math problem are tracked. In one embodiment, the individual 13 is working out a math problem on a piece of paper. Optical character recognition may be used to determine how the individual is proceeding to solve the problem. In one embodiment, the individual 13 is working on some electronic device such as a note pad computer. In this case, tracking the individual's efforts might be performed using a camera and optical character recognition. However, data from the electronic device (e.g., note pad computer) may be accessed to track the individual's progress. Step 1402 is one embodiment of 150 from Figure 1E.

In step 1404, the individual's efforts to solve a problem are analyzed. In one embodiment step 1404 includes determining correctness of the individual's efforts to solve the problem. The computer system 12 may have access to a proper solution to the problem, as well as suitable steps to solve the problem. However, note that some problems can be solved in numerous ways. Therefore, the computer system 12 may have access to numerous possible solutions. In one embodiment, database 57(n) is accessed to obtain the solution(s). In step 1404, the computer system 12 may determine whether the individual 13 is proceeding properly. If not, a suitable suggestion for proceeding may be determined. Step 1404 is one embodiment of 152 from Figure 1E.

In step 1406, the individual 13 is provided instruction using the HMD 2. Step 1406 may include providing one more images in a see-through HMD 2 that is worn by the individual to provide assistance in solving the problem. In one embodiment, the individual 13 is provided a visualization of an equation and what it means. For example, if a math problem involves solving a simultaneous set of two linear equations, a line that represents each linear equation could be shown along with their intersection. As another example, math word problems could be visualized as a real life example (e.g., two trains approaching one another). Step 1406 is one embodiment of 154 from Figure 1E.

Figure 15 is a flowchart of one embodiment of a process of providing instruction to help an individual write. The process is one embodiment of the process of Figure 10. The process is one also one embodiment of the process of Figure 1E. Note that the process may be performed in a classroom setting such as depicted in Figure 1A.

In step 1502, an individual's efforts to write are tracked. This is one example of tracking an individual's efforts to perform a task or process. In one embodiment, the individual 13 is writing on a piece of paper. A 3D image may be generated using one or more cameras to capture the individual's efforts. In one embodiment, the individual 13 is writing on a display of some electronic device. In this case, data from the device might be accessed to capture the individual's efforts. Step 1502 is one embodiment of 150 from Figure 1E.

In step 1504, the accuracy of the individual's writing is analyzed by computer system 12. Step 1504 may include determining feedback to improve performance of the writing. The computer system 12 may have access to valid ways of forming letters, as well as acceptable tolerances (e.g., databases 57(n)). However, note that some variation may be permitted for individual style. Step 1504 is one embodiment of 152 from Figure 1E.

In step 1506, the individual 13 is provided feedback or instruction using the HMD 2. In one embodiment, the individual 13 is shown how the letter(s) or characters should be formed. Step 1506 is one embodiment of 154 from Figure 1E.

The foregoing examples a just a few of the ways in which instruction may be provided. Note that the instruction may be tailored to the individual. For example, the speed of instruction may be flexible per individual's ability.

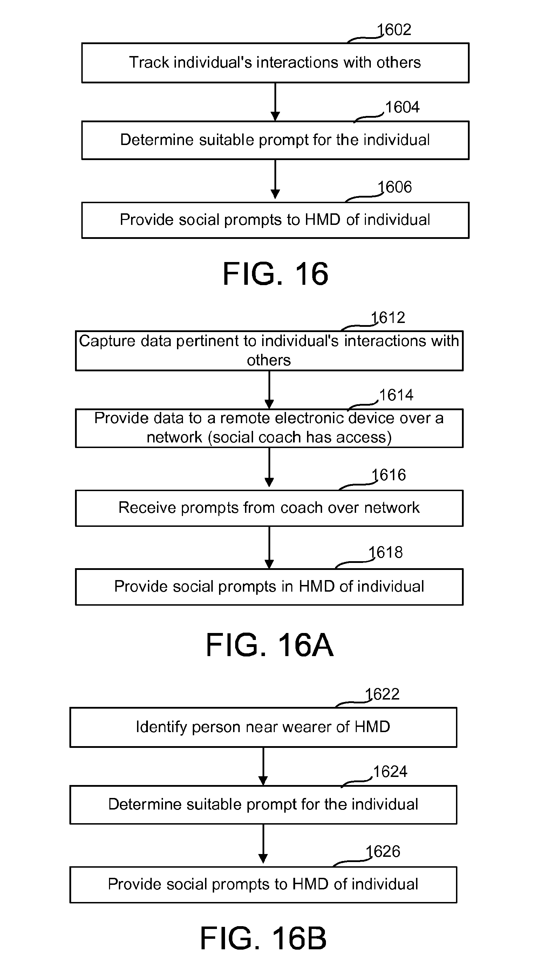

Figure 16 is a flowchart of one embodiment of a process of social coaching using an HMD 2. The process is one embodiment ofthe process of Figure 1E. The process may be performed in the example environment of Figure 1C, but is not so limited. In step 1602, interactions with others around the individual 13 are tracked. Step 1602 may involve capturing a conversation, identifying others, identifying what others are doing or wearing, etc. Step 1602 may be performed using one or more cameras. In one embodiment, facial recognition may be used. In one embodiment, the computer system 12 hears the individual's name. Step 1602 is one embodiment of step 150 of Figure 1E.

In step 1604, a suitable prompt is determined for the individual 13. For example, the computer system 12 determines that the individual 13 might want to comment on the clothes being worn. In one embodiment, the computer system 12 has access to information such as from where the individual 13 knows the individual, how they might be important to a business deal, etc. Step 1604 is one embodiment of step 152 of Figure 1E.

In step 1606, a social prompt is provided to the individual's HMD 2. The prompt could be to show the individual's name overlaying their shirt so that the individual 13 does not forget names. The computer system 12 may remember the type of prompts that are important or useful to the individual 13, such as whether the individual 13 easily forgets names, etc. Thus, in one embodiment, the computer system 12 captures actions, and or conversation. The prompt could be an audio signal played in an audio transducer that is on the HMD 2. Step 1606 is one embodiment of step 154 of Figure 1E.

Figure 16A is a flowchart of one embodiment of a process of social coaching using an HMD 2. The process is one embodiment ofthe process of Figure 1E. The process is also one embodiment of the process of Figure 16. In this embodiment, the individual being coached may be in some social setting such as a date, party, etc. It may be that the individual being coached is somewhat socially awkward; however, the process can be applied to any individual. The individual being coached wears an HMD 2, in one embodiment. The HMD 2 may be connected through a network to a person that acts as a live social coach.

In step 1612, data that is pertinent to interactions with others around the individual 13 is captured. Step 1612 may involve capturing a video using one or more cameras on the HMD 2, capturing a conversation using an audio sensor on the HMD 2, reading facial expressions using a 3D camera on the HMD, etc. Step 1612 is one embodiment of step 150 of Figure 1E. Step 1612 is also one embodiment of step 1602 of Figure 16.

In step 1614, the data from step 1612 is transferred over a network to a remote electronic device. For example, a video stream (which may contain audio) is provided over a network, such that a social coach has access. Some of the data may be transferred to a computing device that may analyze things such as facial expressions. This analysis could be provided to the social coach. Note that such analysis may also be provided locally (e.g., in a computing device near the HMD 2).

In step 1616, a suitable prompt for the individual 13 is received over the network. Step 1616 may include receiving a prompt from the social coach. For example, the social coach may determine that the individual 13 might want to comment on the clothes being worn by their date. Steps 1614-1616 are one embodiment of step 152 of Figure 1E. Steps 1614-1616 are one embodiment of step 1604 of Figure 16.

In step 1618, a social prompt is provided to the individual's HMD 2. The prompt could be an audio signal in an audio transducer of the HMD 2. This might be played in the wearer's ear. The prompt may be text displayed in the HMD. 2. The prompt could be any other signal provided by the HMD 2. Step 1618 is one embodiment of step 154 of Figure 1E. Step 1618 is one embodiment of step 1616 of Figure 16.

Figure 16B is a flowchart of one embodiment of a process of social coaching using an HMD 2. This process could be used in a business setting, but is not so limited. In this embodiment, information from one or more backend databases may be used to provide social coaching. There is no need for a person to serve as the coach, but a person could serve as a coach. The process is one embodiment of the process of Figure 1 E. The process may be performed in the example environment of Figure 1C, but is not so limited.

In step 1622, a person ("subject") near the wearer of the HMD 2 is identified. Step 1622 may involve determining what subject the wearer of the HMD 2 is looking at. Step 1622 may be performed using one or more cameras. In one embodiment, facial recognition may be used. In one embodiment, the computer system 12 hears the subject's name. In one embodiment, the subject has some sort of a tag that can be identified. In one embodiment, the subject is wearing an HMD 2, which may be connected over a network to a computer system. In this manner the subject may be identified to a computer system. Step 1622 may be performed locally or remotely. Step 1622 is one embodiment of step 150 of Figure 1E. Step 1622 is one embodiment of step 1602 of Figure 16.

In step 1624, a suitable prompt is determined for the individual 13. Step 1624 may include accessing one or more databases. This may include accessing a public database, private database, or semiprivate database, such as a corperate database. For example, the public database might be any database that could be located with an Internet search. The private database might include data of interactions that the wearer of the HMD 2 has had with various people. The corporate database might useful if both the wearer and subject work for the same corporation. Step 1624 is one embodiment of step 152 of Figure 1E. Step 1624 is one embodiment of step 1604 of Figure 16.

In step 1626, a social prompt is provided to the individual's HMD 2. The prompt could be text in the HMD 2, a holographic image in the HMD 2, an audio signal, or any other signal that the HMD is capable of providing. The prompt could be a holographic image that shows a nametag on the subject. Step 1626 is one embodiment of step 154 of Figure 1E. Step 1626 is one embodiment of step 1606 of Figure 16.

In one embodiment, a recording of the social interactions can be provided to a parent or teacher for evaluation.

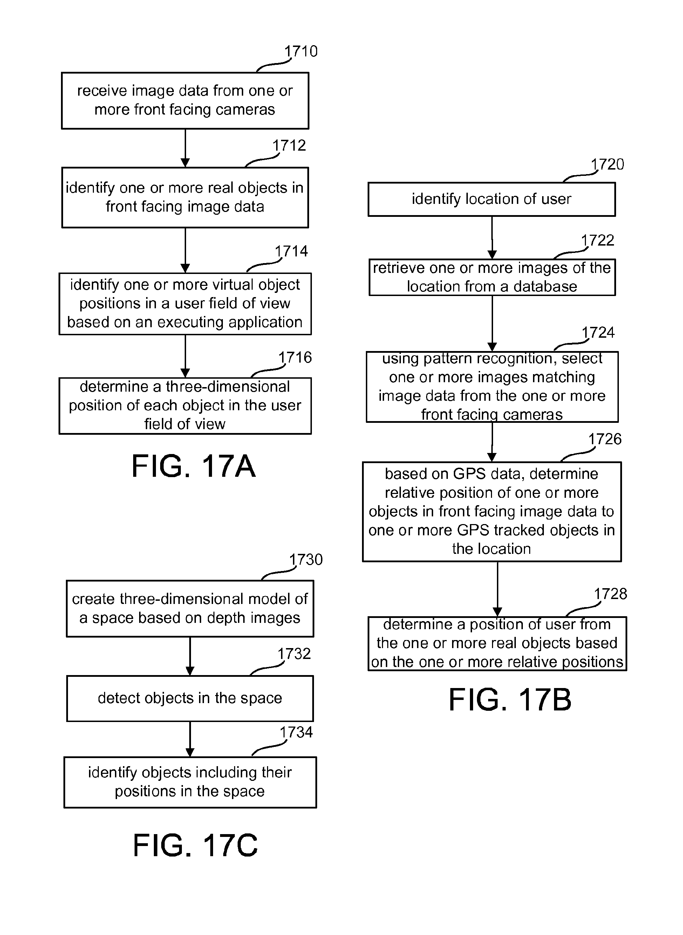

Figure 17A is a flowchart of one embodiment for determining a three-dimensional user field of view. This process may be used in one embodiment of monitoring an individual and/or teacher (step 150 of Figure 1E). The process of Figure 17A may be used in whole or in part, as well as variations thereof, for many other steps or processes described herein. In step 1710, one or more processors of the control circuitry 136, the processing unit 4 the hub computing system 12 or a combination of these receive image data from one or more front facing cameras, and in step 1712 identify one or more real objects in front facing image data. Data from the orientation sensor 132, e.g., the three axis accelerometer 132C and the three axis magnetometer 132A, can also be used with the front facing camera 113 image data for mapping what is around the user, the position of the user's face and head in order to determine which objects, real or virtual, he or she is likely focusing on at the time. Based on an executing application, the one or more processors in step 1714 identify virtual object positions in a user field of view which may be determined to be the field of view captured in the front facing image data. In step 1716, a three-dimensional position is determined for each object in the user field of view. In other words, where each object is located with respect to the display device 2, for example with respect to the optical axis 142 of each display optical system 14.

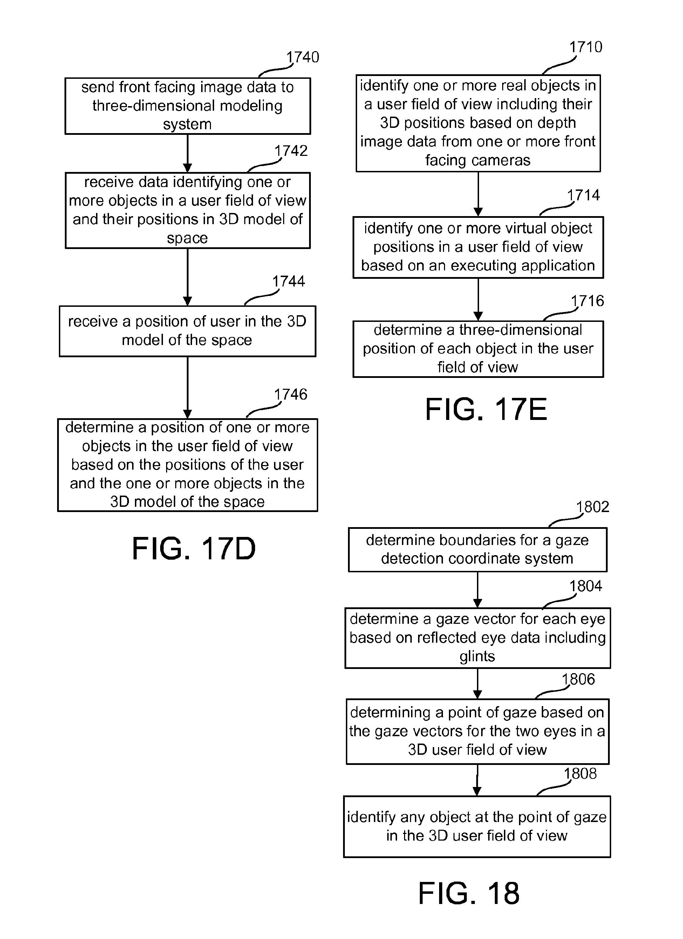

Figure 17B is a flowchart of a method embodiment for identifying one or more real objects in a user field of view. This embodiment may be used to implement step 1712. Each of the implementing examples in Figures 17B, 17D and 17E may be used separately or in conjunction with one another to identify the location of objects in the user field of view. In step 1720, a location of user wearing the HMD 2 is identified. For example, GPS data via a GPS unit on a device held by or on the individual 13 or GPS transceiver on the display device 2 may identify the location of the individual 13 (or teacher 13(a)). In step 1722, one or more processors, retrieve one or more images of the location from a database, and uses pattern recognition in step 1724 to select one or more images matching image data from the one or more front facing cameras. In some embodiments, steps 1722 and 1724 may be performed remotely by a more powerful computer, e.g. hub 12, having access to image databases. Based on GPS data, in step 1726 the one or more processors determines a relative position of one or more objects in front facing image data to one or more GPS tracked objects 1728 in the location, and determines in step 1729 a position of user from the one or more real objects based on the one or more relative positions.

In some embodiments such as in Figure 1A, an individual 13 wearing a see-through, near-eye display may be in a location in which a computer system 12 or one or more computers provides a three-dimensional mapping of objects within a space, e.g. a classroom. Figure 17C is a flowchart of a method embodiment for generating a three-dimensional model of a user space. In step 1730, a computer system with access to depth cameras like hub system 12 with capture devices 20A and 20B creates a three-dimensional model of a space based on depth images. The depth images may be from multiple perspectives and may be combined based on a common coordinate space, e.g. the store space, and creates a volumetric or three dimensional description of the space. In step 1732, objects are detected in the space. For example, edge detection may be performed on the depth images to distinguish objects, including people, from each other. In step 1734, the computer system 12 identifies one or more detected objects including their positions in the space. The objects may also be identified based on comparisons of shape and pattern recognition techniques including facial recognition techniques with reference images of things and people from image databases.

Figure 17D is a flowchart of a method embodiment for identifying one or more objects in a user field of view based on depth data transmitted to the see-through, mixed reality display device 2. The processing unit 4, 17 in step 1740 sends front facing image data to a three-dimensional modeling system such as may be implemented by a depth image processing application executing on a computer system like hub computing system 12 communicatively coupled to depth cameras 20A and 20B. Data from the orientation sensor 132 may also be sent for identifying face or head position. For example, when a user enters a classroom, a computer system at the store provides a 3D mapping of the classroom and what and who is in it. In step 1742, the display device 2 receives data identifying one or more objects in a field of view for the user and their positions in a 3D model of a space. The image data from the one or more front facing cameras 113 approximates the user field of view, so the hub system 12 identifies the object in the front facing image data, for example through image recognition or pattern recognition software. Orientation data may also be used with the front facing image data to refine the user field of view and identify objects tracked by the computer system 12 falling within the user field of view. (The hub system 12 also aligns the front facing image data when received from two or more cameras 113 for identifying the user field of view.) The processing unit 4, 17 in step 1744 receives a position of the user in the 3D model of the space, and in step 1746 the processing unit 4, 17, or the processor 210 of the control circuitry 136 or both determines a position of one or more objects in the user field of view based on the positions of the user and the one or more objects in the 3D model of the space. In another example, the processing unit 4, 17 receives the position ofthe user and the one or more objects as determined by the computer system 12.

Figure 17E is a flowchart of a method embodiment for identifying one or more objects in a user field of view when the front facing camera 113 is a depth camera providing depth image data or has a depth sensor for providing depth data which can be combined with image data to provide depth image data. In step 1710, the one or more processors of the display device 2, e.g. processor 210 of the control circuitry or the processing unit 4,5, or both identifies one or more real objects in a user field of view including their three-dimensional positions based on depth image data from one or more front facing cameras. The one or more processors may also map the user field of view based on orientation data from an orientation sensor 132 in addition to the image data. The one or more processors perform step 1714 of identifying virtual object positions in the user field of view based on an executing application and step 1716 of determining a three-dimensional position of each object in the user field of view. Additionally, a remote computer system 12 may also providing additional processing power to the other processors for performing the steps of Figure 17E.

Figure 18 is a flowchart of a method embodiment for determining gaze. The process is one embodiment of step 702 of Figure 7. Note that the process of Figure 18, as well as variations thereof, may be used in other processes and portions of processes described herein. One or more processors such as that in processing unit 4, the control circuitry 136, or the hub computing system 12 alone or in combination determine in step 1802 boundaries for a gaze detection coordinate system. In step 1804, a gaze vector for each eye is determined based on reflected eye data including glints, and in step 1806 a point of gaze, e.g. what the user is looking at, is determined for the two eyes in a three-dimensional (3D) user field of view. As the positions and identity of objects in the user field of view are tracked, for example, by embodiments like in Figures 17A-17E, in step 1808, any object at the point of gaze in the 3D user field of view is identified. In many embodiments, the three-dimensional user field of view includes displayed virtual objects and an actual direct view of real objects. The term object includes a person.

The method embodiment in Figure 18, which use glint data for other ways of detecting gaze, may identify such glints from image data of the eye. When IR illuminators are used, typically an IR image sensor is used as well.

The foregoing detailed description of the technology herein has been presented for purposes of illustration and description. It is not intended to be exhaustive or to limit the technology to the precise form disclosed. Many modifications and variations are possible in light of the above teaching. The described embodiments were chosen to best explain the principles of the technology and its practical application to thereby enable others skilled in the art to best utilize the technology in various embodiments and with various modifications as are suited to the particular use contemplated. It is intended that the scope of the technology be defined by the claims appended hereto.

## Claims

1. A method comprising:
monitoring one or more individuals engaged in an experience, the monitoring is based on sensor data from one or more sensors (150);
analyzing the monitoring to determine how to enhance the experience (152); and
enhancing the experience based on the analyzing (154), the enhancing includes presenting a signal to at least one see-through head mounted display worn by the one or more individuals.

2. The method of claim 1, wherein the monitoring, the analyzing, and the enhancing include:
detecting an eye gaze of a teacher using at least one of the sensors, the at least one sensor is part of a see-through HMD worn by the teacher;
determining which ofthe one or more individuals the teacher is gazing at;
determining information regarding the individual the teacher is gazing at; and
providing the information to a see-through HMD worn by the teacher.

3. The method of claim 2, wherein the monitoring, the analyzing, and the providing include:
collecting biometric information about the individual the teacher is gazing at using at least one of the sensors;
determining success, comprehension and/or attention of the individual the teacher is gazing at based on the biometric information; and
reporting the success, comprehension and/or the attention of individual the teacher is gazing in the see-through HMD worn by the teacher.

4. The method of claim 1, wherein the monitoring, analyzing and the enhancing include:
tracking a first ofthe individual's efforts to solve a problem;
determining correctness of the individual's efforts to solve the problem; and
providing one more images in a see-through HMD that is worn by the first individual to provide assistance in solving the problem.

5. The method of claim 1, wherein the monitoring, the analyzing, and the enhancing include:
tracking a first of the individual's efforts to perform a task or process;
determining feedback to improve performance of the task or process; and
providing the feedback to a see-through HMD that is worn by the first individual.

6. The method of claim 5, wherein the feedback is a holographic image.

7. The method of claim 1, wherein the monitoring, the analyzing, and the enhancing include:
monitoring a first of the individual's performance (1002);
analyzing the performance based on a set ofinstructions or a model (1004); and
providing holographic instructions in a see-through HMD worn by the first individual to improve the individual's performance (1008).

8. The method of claim 1, further comprising:
accessing a profile for a first of the one or more individuals from a data store, the enhancing includes tailoring educational instruction to the first individual based on the profile.

9. The method of claim 1, wherein the monitoring, the analyzing, and the enhancing include:
tracking interactions of a first of the one or more individuals with others (1602);
determining a suitable prompt for the first individual to enhance social interaction (1604); and
displaying the prompt on a see-through HMD worn by the first individual (1606).

10. A system for enhancing education or instruction, the system comprising:
a processor (310, 420, 532, 601); and
a processor readable storage device (344, 434, 430, 534, 602, 604, 606, 612, 646) coupled to the processor, the processor readable storage device having stored thereon instructions which, when executed on the processor cause the processor to:
receive sensor data from at least one head mounted display (2);
monitor one or more individuals based on the sensor data;
analyze the monitoring to determine how to enhance an educational or instructional experience engaged in by the one or more individuals; and
provide a signal to enhance the educational or instructional experience based on the analyzing.
